# EUROPEAN PATENT SPECIFICATION

(11) **EP 4 221 310 B1**
(45) Date of publication and mention of the grant of the patent: **05.03.2025**
(21) Application number: 20955574.7
(22) Date of filing: 29.09.2020
(51) Int. Cl.: H04W 28/04, H04L 1/08

(54) **WIRELESS COMMUNICATION METHOD AND DEVICE**
VERFAHREN UND VORRICHTUNG ZUR DRAHTLOSEN KOMMUNIKATION
PROCÉDÉ ET DISPOSITIF DE COMMUNICATION SANS FIL

(43) Date of publication of application: 02.08.2023
(73) Proprietor: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LI, Haitao, Dongguan, Guangdong 523860 (CN)
(74) Representative: Ipside
(86) International application number: PCT/CN2020/118989
(87) International publication number: WO 2022/067549

(56) References cited:
- EP-A1- 3 900 243
- EP-B1- 3 900 243
- CN-A- 110 419 238
- CN-A- 110 876 210
- US-A1- 2010 153 804
- US-A1- 2018 041 310
- ERICSSON: "Scheduling enhancements for LTE-M and NB-IoT", vol. RAN WG2, no. Electronic meeting; 20200224 - 20200306, 14 February 2020 (2020-02-14), XP052356140, Retrieved from the Internet <URL:https://ftp.3gpp.org/tsg_ran/WG2_RL2/TSGR2_109_e/Docs/R2-2000977.zip R2-2000977 - Scheduling Enhancements for LTE-M and NB-IoT.docx> [retrieved on 20200214]
- ERICSSON: "Scheduling enhancements for LTE-MTC and NB-IoT", vol. RAN WG2, no. Reno, USA; 20191118 - 20191122, 7 November 2019 (2019-11-07), XP051817193, Retrieved from the Internet <URL:https://ftp.3gpp.org/tsg_ran/WG2_RL2/TSGR2_108/Docs/R2-1915395.zip R2-1915395 - Scheduling Enhancement.docx> [retrieved on 20191107]
- CMCC: "Considerations on UL HARQ RTT Timer", 3GPP DRAFT; R2-164059 CONSIDERATIONS ON UL HARQ RTT TIMER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Nanjing, China; 20160523 - 20160527, 22 May 2016 (2016-05-22), Mobile Competence Centre ; 650, route des Lucioles ; F-06921 Sophia-Antipolis Cedex ; France , XP051105384

## Description

### BACKGROUND

### Technical Field

The embodiments of the present disclosure relate to the communication field, and in particular to a wireless communication method and device.

### Description of Related Art

In a context where discontinuous reception (DRX) takes place, a terminal device may activate a hybrid automatic repeat request (HARQ) round trip time (RTT) timer after completing the uplink transmission or completing the downlink reception. After the timer times out, a network device may perform data scheduling. Typically, the design of a duration of the HARQ RTT timer mainly takes into consideration the processing delay after the terminal device completes data transmission.

In a non-terrestrial network (NTN) system, the signal transmission delay between the terminal and the network is very long. Under the circumstances, how to design the duration of the HARQ RTT timer to take into account power saving of the terminal and scheduling of network is an urgent issue.

Document US 20100153804A1 discloses a method for detecting a hybrid automatic repeat request (HARQ) message. The method comprising setting a round trip time (RTT) based on a time delay associated with acknowledgement (ACK)/negative acknowledgement (NACK) repetitions, and receiving a retransmitted HARQ message when the RTT expires. Also provided is a user equipment (UE) comprising a processor configured to set an RTT based on a time delay associated with ACK/NACK repetitions, and receive a retransmitted HARQ message when the RTT expires.

Document "Scheduling enhancements for LTE-M and NB-IoT", 3GPP DRAFT; R2-2000977, provides a revision of previous contribution R2-1915395 and discusses some isssues related to HARQ RTT timer for LTE-M bundled HARQ ACKs and drx-InactivityTimer for LTE-M.

Document "Scheduling enhancements for LTE-MTC and NB-IoT", 3GPP DRAFT; R2-1915395, discusses some issues related to HARQ-RTT timer and drx-RetransmissionTimer without HARQ ack bundling, as well as the FFS regarding drx-InactivityTimer highlighted in RAN2 agreements.

### SUMMARY

Embodiments of the present disclosure provide a wireless communication method and device, which are able to design the duration of a hybrid automatic repeat request (HARQ) round trip time (RTT) timer according to the RTT between a terminal device and a network device, thereby facilitating to reduce power consumption of the terminal. The invention is set out in independent claims 1 and 3.

Based on the above technical solution, the terminal device or network device is able to determine the duration of the HARQ RTT timer corresponding to the HARQ process used by the data channel according to the RTT, thereby facilitating to take into account power saving of a terminal and scheduling of a network.

### BRIEF DESCRIPTION OF THE DRAWINGS

FIG. 1 is a schematic diagram of an application scenario provided by an embodiment of the present disclosure.
FIG. 2 is a schematic block diagram of discontinuous reception (DRX) according to an embodiment of the present disclosure.
FIG. 3 is a schematic diagram of a wireless communication method provided by an embodiment of the present disclosure.
FIG. 4 is a schematic block diagram of a wireless communication device provided by an embodiment of the present disclosure.
FIG. 5 is a schematic block diagram of a communication device provided by another embodiment of the present disclosure.
FIG. 6 is a schematic block diagram of a chip provided by an embodiment of the present disclosure.

### DESCRIPTION OF THE EMBODIMENTS

The technical solutions in the embodiments of the present disclosure will be described below with reference to the drawings in the embodiments of the present disclosure.

The technical solutions in the embodiments of the present disclosure may be applied to various communication systems, such as: Global System of Mobile communication (GSM) system, Code Division Multiple Access (CDMA) system, Wideband Code Division Multiple Access (WCDMA) system, General Packet Radio Service (GPRS), Long Term Evolution (LTE) system, Advanced long term evolution (LTE-A) system, New Radio (NR) system, evolution system of NR system, LTE-based access to unlicensed spectrum (LTE-U) system on unlicensed spectrum, NR-based access to unlicensed spectrum (NR-U) system on unlicensed spectrum, Non-Terrestrial Networks (NTN) system, Universal Mobile Telecommunications System (UMTS), Wireless Local Area Networks (WLAN), Wireless Fidelity (WiFi), 5th-Generation (5G) system or other communication systems, etc.

Generally speaking, the number of connections supported by conventional communication systems is limited and easy to implement. However, with the development of communication technology, mobile communication systems will not only support conventional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc., the embodiments of the present disclosure may also be applied to these communication systems.

Optionally, the communication system in this embodiment of the disclosure may be applied to a Carrier Aggregation (CA) scenario, a Dual Connectivity (DC) scenario, or an independent Standalone (SA) Web deployment scenario.

Optionally, the communication system in the embodiment of the present disclosure may be applied to an unlicensed spectrum, where the unlicensed spectrum may also be considered as a shared spectrum; or, the communication system in the embodiment of the present disclosure may also be applied to a licensed spectrum, where the licensed spectrum may also be considered as non-shared spectrum.

The embodiments of the present disclosure describe various embodiments in conjunction with a network device and a terminal device, where the terminal device may also be referred to as User Equipment (UE), access terminal, user unit, user station, mobile station, mobile stage, remote station, remote terminal, mobile device, user terminal, terminal, wireless communication device, user agent, or user device, etc.

A terminal device may be a station (ST) in a WLAN, a cellular phone, a cordless phone, a Session Initiation Protocol (SIP) phone, a Wireless Local Loop (WLL) station, a Personal Digital Processing (PDA) device, a handheld device with wireless communication functions, a computing device or other processing devices connected to a wireless modem, a vehicle-mounted device, a wearable device, a next-generation communication system such as a terminal device in an NR network, or a terminal device in future evolved Public Land Mobile Network (PLMN) network, etc.

In an embodiment of the disclosure, the terminal device may be deployed on land, including an indoor or outdoor terminal device, a handheld terminal device, a wearable terminal device or a vehicle-mounted terminal device; or may also be deployed on water (such as ships, etc.); or may also be deployed in the air (such as aircraft, balloons and satellites).

In an embodiment of the disclosure, the terminal device may be a mobile phone, a tablet computer (Pad), a computer with a wireless transceiver function, a Virtual Reality (VR) terminal device, an Augmented Reality (AR) terminal device, a wireless terminal device in industrial control, a wireless terminal device in self driving field, a wireless terminal device in remote medical field, a wireless terminal device in smart grid field, a wireless terminal device in transportation safety field, a wireless terminal device in smart city field, or a wireless terminal device in smart home field.

As an example but not a limitation, in this embodiment of the present disclosure, the terminal device may also be a wearable device. A wearable device may also be called wearable smart devices, which is a general term for the application of wearable technology to smart design of daily wear and development of wearable devices, such as glasses, gloves, watches, clothing and shoes. A wearable device is a portable device that is worn directly on the body or integrated into the user's clothing or accessories. A wearable device is not only a hardware device, but also achieves powerful functions through software support, data interaction, and cloud interaction. Generalized wearable smart devices are full-featured and large-sized, and able to achieve complete or partial functions without relying on smart phones, such as smart watches or smart glasses, etc., and only focus on a certain type of application functions, and need to be used by cooperating with other devices such as smart phones, such as various smart bracelets and smart jewellery for monitoring physical signs.

In an embodiment of the disclosure, the network device may be a device used to communicate with mobile devices, and the network device may be an Access Point (AP) in WLAN, a Base Transceiver Station (BTS) in GSM or CDMA , or an NodeB (NB) in WCDMA, or an Evolutional Node B, eNB or eNodeB in LTE, or a relay station or an access point, or a vehicle-mounted device, a wearable device, and a network device (gNB) in the NR network or a network device in future evolved PLMN network or a network device in the NTN network, etc.

As an example but not a limitation, in an embodiment of the present disclosure, the network device may have a mobile feature, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station disposed on land, water, and other locations.

In an embodiment of the disclosure, the network device may provide services for a cell, and the terminal device communicates with the network device through the transmission resources (for example, frequency domain resources, or spectrum resources) used by the cell. The cell may be a cell corresponding to a network device (for example, a base station), the cell may belong to a macro base station, or a base station corresponding to a small cell. The small cell may include: Metro cell, Micro cell, Pico cell, Femto cell, etc. These small cells are characterized in small coverage and low transmission power, and are suitable for providing high-speed data transmission services.

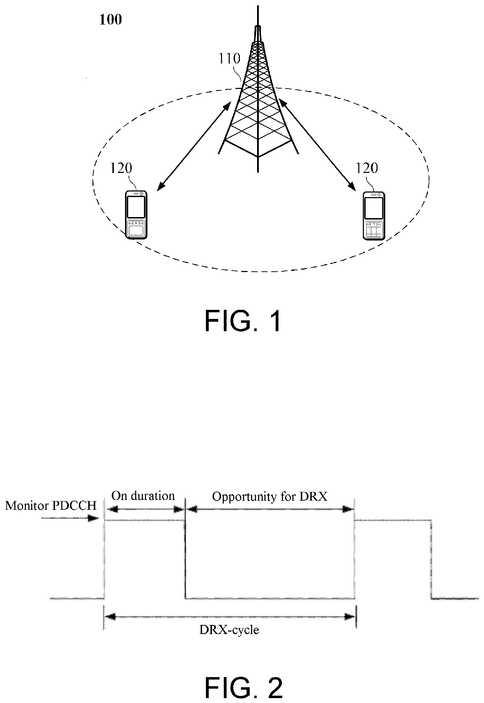

Exemplarily, a communication system 100 applied in this embodiment of the disclosure is shown in FIG. 1. The communication system 100 may include a network device 110, and the network device 110 may be a device for communicating with a terminal device 120 (or called a communication terminal, terminal). The network device 110 may provide communication coverage for a specific geographical area, and may communicate with terminal devices located in the coverage area.

FIG. 1 exemplarily shows one network device and two terminal devices. Optionally, the communication system 100 may include multiple network devices and each network device may include terminal devices of different quantities within the coverage area. The embodiment of the disclosure provides no limitation thereto.

Optionally, the communication system 100 may further include other network entities such as a network controller and a mobility management entity, which is not limited in this embodiment of the present disclosure.

It should be understood that a device with a communication function in the network/system in the embodiment of the present disclosure may be called a communication device. Taking the communication system 100 shown in FIG. 1 as an example, the communication device may include a network device 110 and a terminal device 120 with communication functions, and the network device 110 and the terminal device 120 may be the specific devices described above, and no further details will not be repeated here. The communication device may further include other devices in the communication system 100, such as network controllers, mobility management entities and other network entities, which are not limited in this embodiment of the present disclosure.

It should be understood that the terms "system" and "network" are often used interchangeably herein. The term "and/or" in this context is adopted just to refer to an association relationship between associated objects, which means that there may be three relationships, for example, A and/or B, which may mean three situations: A exists alone, A and B exist simultaneously, and B exists alone. In addition, the sign "/" in the context generally indicates that the objects before and after "/" are in an "or" relationship.

It should be understood that the "indication" mentioned in the embodiments of the present disclosure may be a direct indication, may also be an indirect indication, and may also mean that there is an association relationship. For example, A indicates B, which can mean that A directly indicates B, for example, B can be obtained through A; it can also mean that A indirectly indicates B, for example, A indicates C, and B can be obtained through C; it can also mean that there is an association relationship between A and B.

In the description of the embodiments of the present disclosure, the term "corresponding" may indicate that there is a direct or indirect correspondence between the two, or that there is an association relationship between the two, or a relationship between instructing and being instructed, a relationship between configuring and being configured, etc.

In some scenarios, for the purpose of power saving of the terminal, the concept of DRX is proposed. Specifically, the network device may configure the terminal device to wake up at a time predicted by the network (DRX ON) and monitor the PDSCH, and the network may also configure the terminal device to sleep at a time predicted by the network (DRX OFF), that is, the terminal device does not need to monitor the PDCCH. Therefore, if the network device 120 has data to transmit to the terminal device 110, the network device 120 may schedule the terminal device 110 during the time when the terminal device 110 is in DRX ON, and during the DRC OFF time, due to the radio frequency being turned off, it is possible to reduce power consumption of the terminal.

As shown in FIG. 2, the DRX cycle configured by the network device for the terminal device consists of an On Duration and an Opportunity for DRX. In RRC CONNECTED mode, if the terminal device is configured with the DRX function, during the On Duration time, the terminal device monitors and receives the PDCCH; the terminal device does not monitor the PDCCH during the Opportunity for DRX to reduce power consumption.

It should be understood that the terminal device in the Opportunity for DRX in the embodiment of the present disclosure does not receive the PDCCH, but receives data from other physical channels, the embodiments of the present disclosure are not specifically limited thereto. For example, the terminal device may receive a Physical Downlink Shared Channel (PDSCH), an acknowledgment/non-acknowledgement (ACK/NACK), and the like. In another example, in semi-persistent scheduling (SPS), the terminal device may receive periodically configured PDSCH data.

In some embodiments, a DRX function may be configured for a Media Access Control (MAC) entity through Radio Resource Control (RRC), to control the behavior of the terminal device to monitor the PDCCH. That is, each MAC entity may correspond to a DRX configuration. Optionally, the DRX configuration may include at least one of the following:
drx-onDurationTimer: The duration for the terminal device to wake up at the beginning of a DRX Cycle.
drx-SlotOffset: The delay for the terminal device to start the drx-onDurationTimer.
drx-InactivityTimer: After the terminal device receives a PDCCH indicating initial uplink transmission or initial downlink transmission, the duration for the terminal device to continuously monitor the PDCCH.
drx-RetransmissionTimerDL: The longest duration for the terminal device to monitor the PDCCH indicating downlink retransmission scheduling. Each downlink HARQ process except the broadcast HARQ process corresponds to a drx-RetransmissionTimerDL.
drx-RetransmissionTimerUL: The longest duration for a terminal device to monitor the PDCCH indicating uplink retransmission scheduling. Each uplink HARQ process corresponds to a drx-RetransmissionTimerUL.
longDRX-CycleStartOffset: longDRX-CycleStartOffset is configured to configure the long DRX cycle, and the subframe offset of the start of the long DRX cycle and the short DRX cycle.
drx-ShortCycle: Short DRX cycle, which is an optional configuration.
drx-ShortCycleTimer: The duration in which the terminal device is in the DRX-Short Cycle (and not receiving any PDCCH), which is an optional configuration.

Downlink Hybrid Automatic Repeat Request (HARQ) Round Trip Time (RTT) Timer (DL HARQ RTT Timer): The minimum waiting time that the terminal device expects to receive the PDCCH indicating downlink scheduling. Each downlink HARQ process except the broadcast HARQ process corresponds to a HARQ RTT Timer.
drx-RetransmissionTimerShortTTI: When short TTI is configured, the duration of the downlink retransmission timer.
drx-ULRetransmissionTimerShortTTI: When short TTI is configured, the duration of the uplink retransmission timer.

Uplink Hybrid Automatic Repeat Request (HARQ) Round Trip Time (RTT) Timer (UL HARQ RTT Timer): The minimum waiting time that the terminal device expects to receive the PDCCH indicating uplink scheduling. Each uplink HARQ process corresponds to a UL HARQ RTT Timer.

If the terminal device is configured with DRX, the terminal device needs to monitor the PDCCH during the DRX active time. DRX Active Time includes the following situations:
Any one of the drx-onDurationTimer, the drx-InactivityTimer, the drx-RetransmissionTimerDL, the drx-RetransmissionTimerShortTTI, the drx-RetransmissionTimerUL, the drx-ULRetransmissionTimerShortTTI and a ra-Contention Resolution Timer is running;
The terminal device sends a Scheduling Request (SR) on the PUCCH/short PUCCH (SPUCCH) and is in a pending state;
In the contention-based random access process, the terminal device has not received an initial transmission indicated by the PDCCH scrambled by the cell radio network temporary identifier (Cell RNTI, C-RNTI) after successfully receiving the random access response;
UL grant may be received for a pending HARQ retransmission, and there is data in the HARQ buffer of the asynchronous HARQ process;

The machine type of communication (MTC) PDCCH uplink HARQ-ACK feedback configuration (mpdcch-UL-HARQ-ACK-FeedbackConfig) is configured and is currently undergoing repeated transmission within a bundle.

In some embodiments, if the drx-InactivityTimer times out and/or the terminal device receives a DRX Media Access Control Command Control Element (DRX Command MAC CE), the terminal device uses a long DRX cycle.

In some embodiments, if the drx-ShortCycleTimer times out and/or the terminal device receives a long DRX command MAC CE, the terminal device uses a short DRX cycle.

In some embodiments, the terminal device may determine the time to start the drx-onDurationTimer according to whether it is currently in a long DRX cycle or a short DRX cycle.

For example, if a short DRX cycle is adopted, and the current subframe satisfies [(SFN×10) + subframe number] modulo (drx-ShortCycle) = (drx-StartOffset) modulo (drx-ShortCycle).

In another example, if a long DRX cycle is adopted, and the current subframe satisfies [(SFN×10) + subframe number] modulo (drx-LongCycle) = drx-StartOffset.

In the above equations, modulo represents a modulo operation.

In some embodiments, the terminal device may start the drx-onDurationTimer at a timing after drx-SlotOffset slots from the start of the current subframe.

In some embodiments, the conditions for starting or restarting the drx-InactivityTimer include but are not limited to:

If the terminal device receives a PDCCH indicating initial downlink or uplink transmission, the terminal device starts or restarts the drx-InactivityTimer.

In some embodiments, the conditions for starting and stopping drx-RetransmissionTimerDL include but are not limited to:

When the terminal device receives a PDCCH indicating downlink transmission, or when the terminal device receives a MAC PDU on the configured downlink authorization resources, the terminal device stops the drx-RetransmissionTimerDL corresponding to the HARQ process.

It should be understood that in this embodiment of the present disclosure, the timer configured to control the minimum waiting time for the terminal device to expect to receive the PDCCH indicating downlink scheduling may be expressed in different names. For example, in the LTE system, the timer may be called a HARQ RTT timer, and may be called a drx-HARQ-RTT-TimerDL in the NR system. With the evolution of the standard, the timer may also be updated to other names. The embodiments of the present disclosure provides no limitation to the specific name of the timer and the applicable communication systems, which may be adapted to various systems or networks equipped with this timer. Similarly, the embodiments of the present disclosure provides no limitation to the timer used to control the minimum waiting time required for the terminal equipment to receive the PDCCH indicating uplink scheduling. In the following, it is exemplified that the HARQ RTT timer is in the lower line and the UL HARQ RTT timer is in the upper line, but the present disclosure is not limited thereto.

In some embodiments, the conditions for starting and stopping the HARQ RTT Timer include but are not limited to:
When the terminal device receives a PDCCH indicating downlink transmission, or if the terminal device has a configured downlink grant in the subframe receiving the physical uplink shared channel (PUSCH), then:
If the terminal device is a Narrow Band Internet of Things (NB-IoT) terminal or an enhanced machine type of communication (eMTC) terminal, then;

If the physical layer indicates that multiple transport blocks (TB) transmissions are scheduled, the terminal device starts the HARQ RTT Timer corresponding to the downlink HARQ process used by the PDSCH of each TB of the multiple TBs at the subframe where the last repeated transmission of the PDSCH of the last TB of the multiple TBs is received.

Otherwise, the physical layer indicates that a TB transmission is scheduled, and the terminal device starts the HARQ RTT Timer corresponding to the downlink HARQ process used by the PDSCH in the subframe where the last repeated transmission of the PDSCH is received.

If the UE is not the aforementioned two types of terminals, the HARQ RTT Timer corresponding to the downlink HARQ process used by the PDSCH is activated.

If the HARQ RTT Timer times out, and if the data decoding of the HARQ process fails, the terminal device starts the drx-RetransmissionTimer corresponding to the downlink HARQ process.

For NB-IoT terminals, if the physical layer indicates that the HARQ RTT Timer is associated with multiple TBs, the drx-InactivityTimer is started or restarted after the HARQ RTT Timers corresponding to all these HARQ processes time out, otherwise, the drx-InactivityTimer is started or restarted.

For the UL HARQ RTT Timer, that is, the UL HARQ RTT Timer, the conditions for the terminal device to start or restart the UL HARQ RTT Timer are:
If the terminal device receives a PDCCH indicating an uplink transmission using an asynchronous HARQ process, or if the terminal device has a configured uplink grant for an asynchronous HARQ process in this subframe, or the terminal receives a PDCCH indicating an uplink transmission using an automatic HARQ process, then:
If there is no mpdcch-UL-HARQ-ACK-FeedbackConfig configured:
Condition 1: If the physical layer indicates that multiple TB transmissions are scheduled, the terminal device starts the UL HARQ RTT Timer corresponding to the uplink HARQ process used by the PUSCH of each TB in the multiple TBs in the subframe where the last repeated transmission of the PUSCH of the last TB of the multiple TBs is completed
Condition 2: If the physical layer indicates that a TB transmission is scheduled, the terminal device starts the UL HARQ RTT Timer corresponding to the uplink HARQ process used by the PUSCH in the subframe where the last repeated transmission of the PUSCH is completed.

If the UL HARQ RTT Timer corresponding to an uplink HARQ process times out, the terminal device starts the drx-ULRetransmissionTimer corresponding to the uplink HARQ process. For NB-IoT terminals, if the physical layer indicates that multiple TBs are associated with the UL HARQ RTT Timer, then the drx-InactivityTimer is started or restarted after the UL HARQ RTT Timer corresponding to all these HARQ processes times out; otherwise, the drx-InactivityTimer is started or restarted.

It can be seen from the above DRX process that the terminal device will first start a HARQ RTT timer (UL HARQ RTT Timer for uplink transmission and HARQ RTT Timer for downlink transmission) after completing uplink transmission or downlink reception.

The value of the HARQ RTT Timer mainly takes into account the feedback delay of the terminal device and the terminal processing delay after the HARQ feedback is completed, and the UL HARQ RTT Timer mainly takes into account the processing delay after the terminal device completes the PUSCH transmission.

The processing delay of the terminal device normally takes a few milliseconds. In the ground network, the processing delay is greater than the RTT of the signal transmission between the terminal and the network, that is, the network is able to respond to the subsequent scheduling of the terminal according to the uplink reception status within the processing time. In NTN, the signal transmission delay between the UE and the network is considerably increased. Therefore, how to design the duration of the HARQ RTT timer is a problem to be solved.

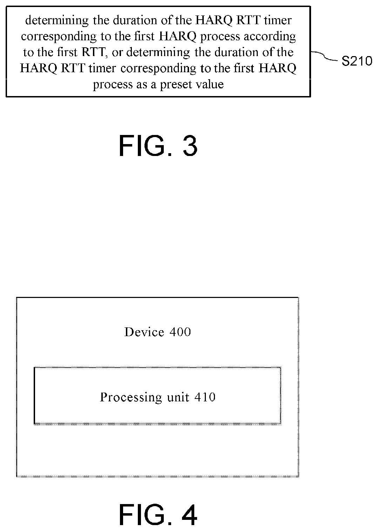

FIG. 3 is a schematic interaction diagram of a wireless communication method 200 provided in an embodiment of the present disclosure. The method 200 may be performed by a terminal device or a network device in the communication system shown in FIG. 1. As shown in FIG. 3, the method 200 may include at least part of the following:
S210. The first device determines the duration of the HARQ RTT timer corresponding to the first HARQ process according to the first RTT, or the first device determines the duration of the HARQ RTT timer corresponding to the first HARQ process as a preset value. The first HARQ process is the HARQ process used by the first data channel, and the first data channel is configured to carry the first TB in at least one TB scheduled by the PDCCH, the first RTT is determined according to the signal transmission delay between the terminal device and the network device.

Optionally, in this embodiment of the present disclosure, the first device may be a terminal device, or may also be a network device. For various specific implementations of the terminal device and network device, please refer to the description of the embodiment shown in FIG. 1, and no further details are repeated herein.

In this embodiment of the present disclosure, the first device is a sending end of the first data channel, or a receiving end of the first data channel.

Optionally, in this embodiment of the present disclosure, the terminal device may receive the DRX configuration of the network device, and the DRX configuration may include, for example, any of the DRX parameters described in the foregoing embodiments, which are not repeated here for conciseness.

Optionally, in some embodiments, the first RTT may be determined according to time advance (TA) of the terminal device. For example, the first RTT may be the TA. Both the terminal device side and the network device side are able to acquire the first RTT, and therefore, both of them are able to determine the duration of the HARQ RTT timer corresponding to the HARQ process according to the first RTT.

In some embodiments, the terminal device may receive a PDCCH sent by a network device, where the PDCCH is configured to schedule uplink or downlink transmission. The scheduling situation of the PDCCH may include at least one of the following:
Scheduling condition 1: PDCCH is configured to schedule the reception of one downlink TB.
Scheduling condition 2: PDCCH is configured to schedule reception of multiple downlink TBs.
Scheduling condition 3: PDCCH is configured to schedule the transmission of one uplink TB.
Scheduling condition 4: PDCCH is configured to schedule the transmission of multiple downlink TBs.

In this embodiment of the present disclosure, the first data channel may be configured to carry the scheduled TB, or in other words, the first data channel is a data channel corresponding to the scheduled TB.

For example, if the PDCCH is configured to schedule the transmission of uplink TBs, the first data channel may be a PUSCH. In another example, if the PDCCH is configured to schedule reception of a downlink TB, the first data channel may be a PDSCH.

It should be understood that, in this embodiment of the present disclosure, when the PDCCH schedules the transmission of an uplink TB, the first HARQ process used by the first data channel is an uplink HARQ process. When the PDCCH schedules reception of a downlink TB, the first HARQ process used by the first data channel is a downlink HARQ process.

After receiving the PDCCH, the terminal device may start the HARQ RTT timer corresponding to the HARQ process used by the data channel that carries the corresponding scheduled TB at a specific time. During the operation period of the HARQ RTT timer, the PDCCH is not monitored. After the HARQ RTT timer times out, the network device may schedule data.

Correspondingly, after the network device sends the PDCCH, the network device may also start the HARQ RTT timer corresponding to the HARQ process used by the data channel that carries the corresponding scheduled TB at a specific time. During the operation period of the HARQ RTT timer, no data transmission using the HARQ process is scheduled again.

It should be understood that in this embodiment of the present disclosure, the scheduled uplink transmission or downlink transmission may be transmitted only once, or may be transmitted multiple times, and the first transmission (that is, initial transmission) of a certain downlink transmission may also be referred to as the first repeated transmission of the downlink transmission, and the last transmission of the downlink transmission may also be referred to as the last repeated transmission of the downlink transmission, similarly, the same is true for the uplink transmission, and details are not repeated here.

In scheduling condition 1, the terminal device may start a HARQ RTT timer corresponding to the first HARQ process used by the first data channel at the first time, where the first data channel is used to carry the one downlink TB.

In some embodiments, the first time may be, for example, a first subframe, and the first subframe is a subframe where the last repeated transmission of the first data channel is received.

In scheduling condition 2, the terminal device may start the HARQ RTT timer corresponding to the first HARQ process used by the first data channel at the second time, where the first data channel is used to carry the first downlink TB among multiple downlink TBs.

In some embodiments, the second timing may be, for example, a second subframe, and the second subframe is a subframe where the last repeated transmission of the last TB of the multiple downlink TBs is received.

In scheduling condition 3, the terminal device may start a UL HARQ RTT timer corresponding to the first HARQ process used by the first data channel at the third timing, where the first data channel is used to carry the one uplink TB.

In some embodiments, the third timing may be, for example, a third subframe, and the third subframe is a subframe where the last repeated transmission of the first data channel is completed.

In scheduling condition 4, the terminal device may start the HARQ RTT timer corresponding to the first HARQ process used by the first data channel at the fourth time, where the first data channel is used to carry the first uplink TB among multiple uplink TBs.

In some embodiments, the fourth time may be, for example, a fourth subframe, and the fourth subframe is a subframe where the last repeated transmission of the last TB of the multiple downlink TBs is completed.

It should be understood that the embodiments of the present disclosure may be applicable to scenarios with a relatively large RTT, such as NTN scenarios, or other scenarios where the duration of the HARQ RTT timer needs to be redesigned or defined, and the present disclosure is not limited thereto.

In the case where the RTT between the terminal device and the network device is large, in some scenarios, in order to achieve continuous data transmission without increasing the number of HARQ processes, the HARQ feedback function of some or all HARQ processes of the terminal device may be configured to be off, so that the network device does not have to wait to receive the uplink transmission (wherein for an uplink HARQ, the uplink data transmission is for the uplink HARQ; for a downlink HARQ, the uplink data transmission is an HARQ feedback by the terminal device with respect to the downlink data transmission of the HARQ) of the terminal device, and continues to schedule data transmission of the HARQ process.

Therefore, in some embodiments, the state of the HARQ feedback function of the HARQ process may be taken into consideration when designing the duration of the HARQ RTT timer.

In an embodiment, when the state of the HARQ feedback function of the first HARQ process is enabled, the duration of the HARQ RTT timer corresponding to the first HARQ process is determined according to the first RTT.

In another embodiment, when the state of the HARQ feedback function of the first HARQ process is off, the duration of the HARQ RTT timer corresponding to the first HARQ process is determined as a preset value.

Optionally, the preset value may be a non-negative constant, such as 0 or 3. The unit of measurement may be millisecond or subframe, etc.

Optionally, in this embodiment of the disclosure, the duration design of the HARQ RTT timer corresponding to the downlink HARQ process may take into account at least one of the HARQ-ACK feedback delay of the terminal device, the time it might take for the terminal device to perform HARQ-ACK feedback, and the RTT.

It should be understood that in the embodiment of the present disclosure, since there are many cases where the terminal device performs HARQ-ACK feedback, the condition where the HARQ-ACK feedback takes a lot of time might take place more frequently. This disclosure provides no limitation thereto, and the following describes in detail in conjunction with specific embodiments.

In an example, if HARQ-ACK feedback is performed on a TB, the time it might take for a terminal device to perform HARQ-ACK feedback may include, for example, the time taken to perform a single HARQ-ACK feedback on a TB, the time taken to perform multiple HARQ-ACK feedbacks, etc.

In another example, if it is necessary to perform feedback on multiple TBs, the time it might take for the terminal device to perform HARQ-ACK feedback may include, for example, the time taken to perform a single HARQ-ACK feedback on each of the multiple TBs, or the time taken to perform multiple HARQ-ACK feedbacks on each of the multiple TBs, or the time taken to perform HARQ-ACK bundling on the multiple TBs, or the time taken to perform a single HARQ-ACK feedback on some TBs among the multiple TBs, and the time taken to perform multiple HARQ-ACK feedbacks on other TBs, and the like.

In an implementation, the duration of the HARQ RTT timer may be designed such that the end timing (or stop timing) of the HARQ RTT timer is later than the RTT timing or to be the RTT timing, and the timing when the terminal device completes the HARQ-ACK feedback is denoted as the feedback end timing. This RTT timing follows the feedback end timing and is spaced apart from the feedback end timing by the first RTT, which is because the network device will not schedule the terminal device to use the same HARQ process for uplink or downlink transmission before the RTT timing. Therefore, the terminal device may not monitor the PDCCH, so that the power consumption of the terminal may be reduced.

In an embodiment, the end timing of the HARQ RTT timer may be, for example, the first PDCCH occasion (PO) after the RTT timing, or the subframe where the first PO after the RTT timing is located. Data scheduling is not performed by the network device on non-POs, therefore, monitoring the PDCCH is started at the first PO or the subframe where the first PO is located after the RTT timing, which helps to reduce the power consumption of the terminal.

The following describes how to determine the duration of the HARQ RTT timer corresponding to the downlink HARQ process when the PDCCH schedules downlink transmission.

Optionally, in some embodiments of the present disclosure, step S210 may specifically include: determining, according to the first RTT and first information, a duration of a HARQ RTT timer corresponding to the first HARQ process; the first information includes at least one of the following: the HARQ-ACK feedback delay of the at least one TB; the processing delay after the terminal device completes the HARQ-ACK feedback; a parameter of the number of times of repeated transmissions of the HARQ-ACK information feedback corresponding to the at least one TB; the number of the at least one TB; whether the terminal device is configured for HARQ-ACK bundling; the number of TBs for HARQ-ACK bundling; the state of the HARQ feedback function corresponding to the first HARQ process; HARQ feedback duration, indicating the total time taken to send one HARQ feedback information for multiple times; the time taken to send a HARQ feedback information at a time; the first PDCCH interval, indicating the time interval from the first timing to the first PDCCH opportunity after the first timing, where the first timing is after the terminal device performs HARQ feedback and is spaced apart from the HARQ feedback by the first RTT; the second PDCCH interval, indicating the time interval from the second timing to the first PDCCH opportunity after the second timing, the second timing is after the terminal device performs HARQ feedback, and is spaced apart from the HARQ feedback by the processing delay of the terminal device.

Optionally, in this embodiment of the present disclosure, the HARQ-ACK feedback delay may be a delay between a time when the terminal device completes downlink transmission and a time when the terminal device starts to perform HARQ-ACK feedback on the downlink transmission.

Optionally, in this embodiment of the present disclosure, the processing delay after the terminal device completes the HARQ-ACK feedback may include, for example, the delay during which the terminal switches from uplink transmission to downlink reception, or the delay between a time when HARQ-ACK feedback is completed and a time the next data transmission is performed.

Optionally, in this embodiment of the present disclosure, the parameter of the number of times of repeated transmissions of the HARQ-ACK information feedback may be used to indicate how many times the HARQ-ACK information needs to be fed back, for example once or multiple times.

Optionally, in this embodiment of the present disclosure, whether the terminal device is configured with HARQ-ACK bundling may be used to determine the number of HARQ-ACK information that needs to be transmitted for the at least one TB.

For example, when HARQ-ACK bundling is not configured, the HARQ-ACK information of each TB needs to be fed back separately, and the number of HARQ-ACK information is the same as the number of scheduled TBs. When HARQ-ACK bundling is configured, the HARQ-ACK information of multiple TBs may be bundled and fed back, and the number k of HARQ-ACK information may be determined according to the number of scheduled TBs and the number M of bundled feedback TBs. For example, k= ceiling(N_{TB}/M), where N_{TB} is the number of TBs scheduled by PDCCH, and M is the bundling size of multiple TB HARQ-ACKs indicated in PDCCH, that is, the feedback that how many TBs are included in one bundling, and ceiling means rounding up.

Optionally, in this embodiment of the present disclosure, the state of the HARQ feedback function corresponding to the first HARQ process may be, for example, an on state or an off state. When the state of the HARQ feedback function corresponding to the first HARQ process is on, the duration of the HARQ RTT timer corresponding to the first HARQ process may be determined according to the first RTT in combination with the other information above. When the state of the HARQ feedback function corresponding to the first HARQ process is off, the duration of the HARQ RTT timer corresponding to the first HARQ process is determined as the preset value.

In some embodiments, the first PDCCH interval may be the time interval between the aforementioned RTT timing and the first PDCCH opportunity following the RTT timing. More specifically, the first PDCCH interval is the time interval between the RTT timing and the subframe where the first PDCCH opportunity following the RTT timing is located. In other words, the first PDCCH interval is the time interval from a timing when the terminal device undergoes the first RTT after completing the HARQ feedback to the first subframe of the next PDCCH opportunity.

In some embodiments, the second PDCCH interval may be a time interval between a timing during which the processing delay elapses after the aforementioned feedback end timing and the first PDCCH opportunity thereafter. More specifically, the second PDCCH interval is the time interval between this timing and the subframe where the first PDCCH opportunity following the time is located. In an example, the second PDCCH interval is the time interval between the third subframe after the last subframe used by the terminal device to complete the HARQ feedback and the first subframe of the next PDCCH opportunity.

The following describes how to determine the duration of the HARQ RTT timer corresponding to the downlink HARQ process from the perspective of the terminal device. For the network device, the above-mentioned information may also be acquired by the network device. Therefore, the network device may also determine the duration of the HARQ RTT timer corresponding to the downlink HARQ process in a similar manner performed by the terminal device. Further, when the HARQ RTT timer corresponding to the downlink HARQ process does not time out, data scheduling is not performed. When the timer times out, data scheduling is performed, and further details are not repeated herein for conciseness.

In some embodiments, the step of determining the duration of the HARQ RTT timer corresponding to the first HARQ process according to the first RTT and the first information includes: determining, by the terminal device, a first duration according to the first RTT and the first information; further determining the duration of the HARQ RTT timer corresponding to the first HARQ process according to the first duration.

In an embodiment, the terminal device may determine the first duration as the duration of the HARQ RTT timer corresponding to the first HARQ process.

In an embodiment, the terminal device may determine the larger value among the first duration and the first preset duration as the duration of the HARQ RTT timer corresponding to the first HARQ process, where the first preset duration is determined according to the feedback delay of the at least one TB and the processing delay.

The following describes how to determine the duration of the HARQ RTT timer corresponding to the downlink HARQ process in combination with specific embodiments.

Condition 1: The at least one TB only includes the first TB.

In the condition 1, the feedback delay of the at least one TB includes a first time interval, and the first time interval represents the time interval between the last transmission of the first TB and the first transmission of the HARQ feedback information corresponding to the first TB.

The parameter of the number of times of repeated transmissions of the HARQ-ACK information feedback corresponding to the at least one TB includes a first parameter and/or a second parameter, where the first parameter is used to indicate the first transmission of the PUCCH. The second parameter is used to indicate the PUCCH repetition factor. That is, the number of times of repeated transmissions of the first TB feedback is multiple times, where the PUCCH is used to carry the HARQ feedback information corresponding to the first TB.

In this condition 1, the terminal device may determine the first duration according to the first RTT, the first time interval, and the parameter of the number of times of repeated transmissions of the feedback.

In an example, the first duration is equal to a sum of the first time interval, the first parameter, and the first RTT.

In another example, the first duration is equal to a sum of the first time interval, the second parameter, and the first RTT.

Optionally, the first preset duration is equal to the feedback delay of the first TB and the processing delay.

Then, in some embodiments, the duration of the HARQ RTT timer corresponding to the first HARQ process may be set to the first duration, or the maximum value among the first duration and the first preset duration.

Condition 2: The at least one TB includes multiple TBs, the multiple TBs include the first TB, and the terminal device is not configured with the HARQ-ACK bundling, that is, the multiple TBs need separate feedback.

In this condition 2, the feedback delay of the at least one TB includes a second time interval, and the second time interval represents a time interval between the last transmission of the last TB in the multiple TBs and the first transmission of the HARQ feedback information corresponding to the multiple TBs.

The parameter of the number of times of repeated transmissions of the HARQ-ACK information feedback corresponding to the at least one TB includes a first parameter N1 and/or a second parameter N, where the first parameter N1 is used to indicate the first transmission of the PUCCH, and the PUCCH is used to carry the HARQ feedback information corresponding to the last TB among the multiple TBs. In other words, the number of times of repeated transmissions of feedback of the last TB may be 1, that is, N1 is 1. The second parameter N is used to indicate the PUCCH repetition factor.

In this condition 2, the terminal device may determine the first duration according to the first RTT, the number of the plurality of TBs, the second time interval, and the parameter of the number of times of repeated transmissions of the feedback.

In some embodiments, when determining the duration of the HARQ RTT timer, the time taken to perform HARQ-ACK feedback is taken into account, including the time taken for the HARQ feedback information corresponding to the multiple TBs to be repeatedly transmitted N times (the worst condition). Or, when the HARQ feedback information corresponding to the last TB among the plurality of TBs is transmitted only once, the time that is taken into account is the time taken for the HARQ feedback information corresponding to other TBs is repeatedly transmitted N times.

Assuming that there are N_{TB} TBs, the time taken to perform HARQ-ACK feedback may be, for example, N_{TB}*N or (N_{TB} -1)*N+N1, where N represents the time taken for N times of repeated transmissions of one HARQ feedback information, N1 is the time taken for the first repeated transmission of the HARQ feedback information corresponding to the last TB. The unit of N may be the time required for a transmission of a HARQ information at one time, or it may be considered that a single transmission of a HARQ information requires 1 subframe, that is, the unit of N may be a subframe.

It should be understood that the unit of the duration of the HARQ RTT timer determined in the embodiment of the present disclosure may be a subframe or millisecond, which is not limited in the present disclosure.

In an example, the first duration is equal to T2+N_{TB}*N+RTT or T2+(N_{TB} - 1)*N+N1+RTT.

In an example, the first preset duration is equal to 7+ N_{TB}*N.

RTT represents the first RTT, T2 represents the second time interval, N1 represents the first parameter, N represents the second parameter, and N_{TB} represents the number of the multiple TBs. Condition 3: The at least one TB includes multiple TBs, the multiple TBs include the first TB, and the terminal device is configured with HARQ-ACK bundling, that is, the multiple TBs may perform bundling feedback.

In this condition 3, the feedback delay of the at least one TB includes a third time interval, and the third time interval indicates a time interval between the last transmission of the last TB in the multiple TBs and the first transmission of the HARQ feedback information corresponding to the multiple TBs.

The parameter of the number of times of repeated transmissions of the HARQ-ACK information feedback corresponding to the at least one TB includes a first parameter and/or a second parameter, where the first parameter is used to indicate the first transmission of the PUCCH, and the PUCCH is used to carry the HARQ feedback information of the last bundling feedback among the multiple TBs. The second parameter is used to indicate the PUCCH repetition factor.

In this condition 3, the terminal device may determine the duration of the HARQ RTT timer corresponding to the first HARQ process according to the first RTT, the third time interval, the parameter of the number of times of repeated transmission of feedback, and the number of groups for performing HARQ-ACK bundling on the multiple TBs.

This condition 3 is similar to condition 2, the difference is that in condition 2, N_{TB} TBs need to be fed back individually, so the number of HARQ feedback information is N_{TB}, and in condition 3, bundling feedback may be performed, so the number of HARQ feedback information is changed to k, for example k=ceiling(N_{TB} /M). To further determine the duration, it is only required to replace N_{TB} in condition 2 with k.

In an example, the first duration is equal to T3+k*N+RTT, or T3+(k-1)*N+N1+RTT.

Correspondingly, the first preset duration is equal to 7+k*N; where RTT represents the first RTT, T3 represents the third time interval, N1 represents the first parameter, N represents the second parameter, and k represents the number of bundling for performing HARQ-ACK bundling on the multiple TBs.

Optionally, in some embodiments, the implementations in Condition 1 to Condition 3 may be applied to Reduced Capability (RedCap) terminals. Such terminals have lower requirements of performance on delay, reliability, bandwidth, coverage, and throughput, such as enhanced mechanical communication eMTC terminals.

Condition 4: The at least one TB only includes the first TB.

In this condition 4, the feedback delay of the at least one TB includes a fourth time interval, and the fourth time interval represents a time interval between the last transmission of the first TB and the first transmission of the HARQ feedback information corresponding to the first TB, that is, the time interval between the last subframe of the PDSCH of the first TB and the first subframe of the HARQ feedback corresponding to the first TB.

The first information includes the fourth time interval, the HARQ feedback duration and the first PDCCH interval, where the HARQ feedback duration is the total time taken for the transmission of the HARQ feedback information corresponding to the first TB (the transmission may be a single transmission, or may also be multiple transmissions). The first PDCCH interval is a time interval between a timing when the first RTT elapse after the transmission of the HARQ feedback information corresponding to the first TB and the next PO.

In this condition 4, the terminal device may determine the first duration according to the first RTT, the fourth time interval, the HARQ feedback duration and the first PDCCH interval.

In an example, the first duration is equal to T4+T_{CK}+RTT+ΔPDCCH1, corresponding to the condition where the HARQ feedback information of the first TB is transmitted once, T_{CK} indicates the time taken to send one feedback information at a time, and the T_{CK} may be 1ms or other length of time.

In another example, the first duration is equal to T4+N+RTT+ΔPDCCH1, corresponding to the condition where the HARQ feedback information of the first TB is transmitted N times, N represents the time taken for sending one feedback information for N times.

Optionally, the first preset duration is equal to T4+3+N+ΔPDCCH2, where RTT represents the first RTT, T4 represents the fourth time interval, N represents the HARQ feedback duration, ΔPDCCH1 represents the first PDCCH interval, and ΔPDCCH2 represents the second PDCCH interval.

It should be understood that in this embodiment of the present disclosure, the unit of N may be the time required for a transmission of one HARQ information at one time, or it may be considered that one subframe is required for a single transmission of one HARQ information, that is, the unit of N may be a subframe.

Optionally, in some embodiments, the implementation in condition 4 may be applicable to RedCap terminals, such as NB-Iot terminals.

Condition 5: The at least one TB includes multiple TBs, the multiple TBs include the first TB, and the terminal device is configured with HARQ-ACK bundling, that is, the multiple TBs may perform bundling feedback.

In this condition 5, the feedback delay of the at least one TB includes a fifth time interval, and the fifth time interval represents a time interval between the last transmission of the multiple TBs and the first transmission of the HARQ feedback information corresponding to the multiple TBs. More specifically, the fifth time interval represents the time interval between the last subframe of the PDSCH of the last TB in the multiple TBs and the first subframe corresponding to the first HARQ feedback information.

The first information includes the fifth time interval, the HARQ feedback duration and the first PDCCH interval, where the HARQ feedback duration is the total time taken for the transmission of the HARQ feedback information corresponding to the multiple TBs (the transmission may be a single transmission, or may also be multiple transmissions). The first PDCCH interval is a time interval between a timing when the first RTT elapses after the transmission of the last HARQ feedback information and the next PO.

In this condition 5, the specific method of determining the time taken to transmit the HARQ feedback information corresponding to the multiple TBs may be derived from relevant descriptions in condition 3.

In a specific example, the plurality of TBs includes two TBs, and the HARQ feedback information corresponding to the two TBs may be bundled for feedback, then the time required to transmit the HARQ feedback information corresponding to the two TBs for N times is N. The unit of measurement may be the time taken for a transmission of one HARQ feedback information at a time, or the unit of measurement may be a subframe. That is, the HARQ feedback duration may be N.

In this condition 5, the terminal device may determine the first duration according to the first RTT, the fifth time interval, the HARQ feedback duration and the first PDCCH interval.

In an example, the first duration is equal to T5+N+RTT+ΔPDCCH1, where the HARQ feedback information of the multiple TBs is transmitted for N times.

Optionally, the first preset duration is equal to T5+3+N+ΔPDCCH2, where RTT represents the first RTT, T5 represents the fifth time interval, N represents the HARQ feedback duration, ΔPDCCH1 represents the first PDCCH interval, and ΔPDCCH2 represents the second PDCCH interval.

Optionally, in some embodiments, the implementation in condition 5 may be applicable to RedCap terminals, such as NB-Iot terminals. Specifically, the implementation in condition 5 is applicable to a situation where HARQ-ACK bundling is configured on a terminal device in an interleaving scenario.

Condition 6: The at least one TB includes multiple TBs, the multiple TBs include the first TB, and the terminal device is not configured with HARQ-ACK bundling, that is, the multiple TBs may perform feedback separately.

In this condition 6, the feedback delay of the at least one TB includes a sixth time interval, and the sixth time interval represents the time interval between the last transmission of the multiple TBs and the first transmission of the HARQ feedback information corresponding to the multiple TBs. More specifically, the sixth time interval represents the time interval between the last subframe of the PDSCH of the last TB in the multiple TBs and the first subframe of the HARQ feedback information corresponding to the first TB.

The first information includes the sixth time interval, the HARQ feedback duration and the first PDCCH interval, where the HARQ feedback duration is the total time taken for the transmission of the HARQ feedback information corresponding to the multiple TBs (the transmission may be a single transmission, or may also be multiple transmissions). The first PDCCH interval is a time interval between a timing when the first RTT elapses after the transmission of the HARQ feedback information of the last TB and the next PO.

In this condition 6, the specific method of determining the time taken to transmit the HARQ feedback information corresponding to the multiple TBs may be derived from the relevant descriptions in condition 2.

In a specific example, the multiple TBs include two TBs, and in one condition, the HARQ feedback duration includes the time required to transmit the HARQ feedback information corresponding to the two TBs respectively for N times, that is, 2 *N, the unit of measurement may be the time taken for a single transmission of one HARQ feedback information, or the unit of measurement may be one subframe.

In another specific example, the multiple TBs include two TBs. In another case, the HARQ feedback duration includes the time required to transmit the HARQ feedback information corresponding to the first TB for N times and the time required to transmit the HARQ feedback information corresponding to the second TB for N1 times, that is, N+N1, unit of measurement may be the time taken for a single transmission of one HARQ feedback information, or the unit of measurement may be one subframe. Optionally, in some embodiments, N1 is 1.

Further, the terminal device may determine the first duration according to the first RTT, the sixth time interval, the HARQ feedback duration, and the first PDCCH interval.

In an example, the first duration is equal to T6+2*N+RTT+ΔPDCCH1.

In another example, the first duration is equal to T6+N+N1+RTT+ΔPDCCH1.

Optionally, the first preset duration is equal to T6+2N+1+ΔPDCCH2, where RTT represents the first RTT, T5 represents the sixth time interval, N represents the HARQ feedback duration, ΔPDCCH1 represents the first PDCCH interval, and ΔPDCCH2 represents the second PDCCH interval.

Optionally, in some embodiments, the implementation in condition 6 may be applicable to RedCap terminals, such as NB-Iot terminals. Specifically, the implementation in condition 6 is applicable to a non-interleaved scenario, or a situation in which a terminal device is not configured with HARQ-ACK bundling in an interleaved scenario.

The following describes how to determine the duration of the UL HARQ RTT timer corresponding to the uplink HARQ process when the PDCCH schedules uplink transmission.

In an embodiment, the duration of the HARQ RTT timer corresponding to the first HARQ process may be determined as the first RTT, or a larger value among the first RTT and the second preset duration.

Optionally, the second preset duration may be 4, or may be determined according to a high-level parameter K_{ULHARQRTT}, and the unit of measurement is a subframe or millisecond.

Optionally, in other embodiments of the present disclosure, the step S210 may specifically include: determining the duration of the HARQ RTT timer corresponding to the first HARQ process according to the first RTT and the second information; where the second information includes at least one of the following: the third PDCCH interval, indicating the time interval from the third timing to the first PDCCH opportunity after the third timing, where the third timing is after the timing when the terminal device finishes transmitting the data channel corresponding to the at least one TB, and spaced apart from the timing by the first RTT; the fourth PDCCH interval, indicating the time interval from the fourth timing to the first PDCCH opportunity after the fourth timing, the fourth time is after the completion of transmission of the data channel corresponding to the at least one TB, and is spaced apart from the completion by the processing delay.

In some embodiments, when the state of the HARQ feedback function corresponding to the first HARQ process is enabled, the duration of the HARQ RTT timer corresponding to the first HARQ process may be determined according to the first RTT. When the state of the HARQ feedback function corresponding to the first HARQ process is off, the duration of the HARQ RTT timer corresponding to the first HARQ process is determined as a preset value.

In some embodiments, the timing when the terminal device completes transmission of the data channel corresponding to the at least one TB is denoted as the transmission completion timing, the first RTT timing after the transmission completion timing is the RTT timing, and the third PDCCH interval may be a time interval between the RTT timing and the first PDCCH opportunity after the RTT timing. More specifically, the third PDCCH interval may be a time interval between the RTT timing and the subframe where the first PDCCH opportunity following the RTT timing is located, that is, the time interval between the timing when the terminal device undergoes the first RTT after completing the uplink transmission and the first subframe of the next PDCCH opportunity.

In some embodiments, the fourth PDCCH interval may be a time interval between the timing when the processing delay elapses after the transmission completion timing and the first PDCCH opportunity thereafter. In an example, the fourth PDCCH interval is a time interval between 3ms after the terminal device completes the last subframe corresponding to the PUSCH transmission and the first subframe of the next PDCCH opportunity.

The following describes how to determine the duration of the HARQ RTT timer corresponding to the uplink HARQ process from the perspective of the terminal device. For the network device, the above information may also be acquired by the network device. Therefore, the network device may also determine the duration of the HARQ RTT timer corresponding to the uplink HARQ process in a similar manner performed by the terminal device. Further, when the HARQ RTT timer corresponding to the uplink HARQ process times out, data scheduling is performed. For conciseness, details are not described here.

In some embodiments, the step of determining the duration of the HARQ RTT timer corresponding to the first HARQ process according to the first RTT and the second information includes: determining, by the terminal device, a second duration according to the first RTT and the second information; further determining the duration of the HARQ RTT timer corresponding to the first HARQ process according to the second duration.

In an embodiment, the terminal device may determine the second duration as the duration of the HARQ RTT timer corresponding to the first HARQ process.

In another embodiment, the terminal device may determine a larger value among the second duration and the second preset duration as the duration of the HARQ RTT timer corresponding to the first HARQ process.

The following describes how to determine the duration of the HARQ RTT timer corresponding to the first HARQ process in combination with specific embodiments.

Condition 7: This condition may be applied to RedCap terminals, for example, eMTC terminals.

In an embodiment, the terminal device may determine the first RTT as the duration of the HARQ RTT timer corresponding to the first HARQ process.

In another embodiment, the terminal device may determine the duration of the HARQ RTT timer corresponding to the first HARQ process according to the first RTT and the second preset duration.

For example, the maximum value among the first RTT and the second preset duration may be determined as the duration of the HARQ RTT timer corresponding to the first HARQ process.

Condition 8: The at least one TB includes one TB, and the multiple TBs include the first TB.

This condition may apply to RedCap terminals, for example, NB-IoT terminals.

In condition 8, the terminal device may determine the second duration according to the first RTT and the third PDCCH interval, where the third PDCCH interval ΔPDCCH3 represents the time interval from the timing when the first RTT elapses after the last subframe corresponding to the PUSCH transmission of the first TB to the next PO, or, the time interval between the timing when the first RTT elapses after the last subframe corresponding to the PUSCH transmission of the first TB and the first subframe of the next PO.

In an example, the second duration is equal to RTT+ΔPDCCH3.

In an example, the second preset duration is equal to 4+ΔPDCCH4, where RTT represents the first RTT, ΔPDCCH3 represents the third PDCCH interval, and ΔPDCCH4 represents the fourth PDCCH interval.

Condition 9: The at least one TB includes multiple TBs, and the multiple TBs include the first TB.

This condition may be applied to RedCap terminals, for example, NB-IoT terminals.

In condition 9, the terminal device may determine the second duration according to the first RTT and the third PDCCH interval, where the third PDCCH interval ΔPDCCH3 represents the time interval between the timing when the first RTT elapses after the last subframe corresponding to the PUSCH transmission of the first TB and the next PO, or, the time interval between the timing when the first RTT elapses after the last subframe corresponding to the PUSCH transmission of the first TB and the first subframe of the next PO.

In an example, the second duration is equal to RTT+ΔPDCCH3.

In an example, the second preset duration is equal to 1+ΔPDCCH4, where RTT represents the first RTT, ΔPDCCH3 represents the third PDCCH interval, and ΔPDCCH4 represents the fourth PDCCH interval.

It should be understood that the embodiment of the present disclosure only takes 1 ms or one subframe as an example to exemplify the time taken for a single feedback of one HARQ feedback information. In other embodiments, when the time taken for a single feedback of one HARQ feedback information is a different time length, it is only necessary to multiply the taken time by the other time lengths, which is not limited in this disclosure.

The specific implementation process of the foregoing nine conditions will be described below in combination with specific embodiments.

Embodiment 1, corresponding to the aforementioned condition 1:
Optionally, Embodiment 1 may be applicable to eMTC terminals.

Step 1: The UE receives the DRX configuration of the network.

Step 2: The UE receives the PDCCH, and the PDCCH indicates to schedule a downlink TB, then the UE starts the HARQ RTT Timer corresponding to the downlink HARQ process i used by the PDSCH in the subframe where the last repeated transmission of the PDSCH of the one downlink TB is received.

Step 3: The UE determines the duration of the HARQ RTT Timer corresponding to the downlink HARQ process i in step 2.

In some embodiments, if the downlink HARQ process i is a HARQ process with the HARQ feedback function enabled, then:
For the FDD system, the duration of the HARQ RTT Timer may be determined in one of the following ways:
Mode 1: The duration of the HARQ RTT Timer is max{T1+N1+RTT, 7+N};
Mode 2: The duration of the HARQ RTT Timer is max{T1+N+RTT, 7+N};
Mode 3: The duration of the HARQ RTT Timer is T1+N+RTT, where T1 represents the time interval between the last repeated transmission of the PDSCH and the first repeated transmission of the corresponding HARQ feedback, and the time interval corresponds to the first time interval in condition 1.

Optionally, in some embodiments, T1 may be a predefined value, for example, T1=4.

N1 represents the first repeated transmission of the PUCCH, and the PUCCH is used to carry the HARQ feedback information corresponding to the TB; N1 corresponds to the first parameter described above.

In some embodiments, only valid uplink subframes determined by fdd-UplinkSubframeBitmapBR are included in N1. Optionally, the value of N1 is 1.

RTT represents the signal transmission delay between the UE and the network, that is, the first RTT; N represents the PUCCH repetition factor adopted, and corresponds to the second parameter described above.

Optionally, only valid uplink subframes determined by fdd-UplinkSubframeBitmapBR are included in N.

For a TDD system, the duration of the HARQ RTT Timer may be determined in one of the following ways:
Mode 1: The duration of the HARQ RTT Timer is max{T1+N1+RTT, 3+k+N};
Mode 2: The duration of the HARQ RTT Timer is max{T1+N+RTT, 3+k+N};
Mode 3: The duration of the HARQ RTT Timer is T1+N+RTT, where the definitions of T1, N1, RTT and N are the same as those of the corresponding parameters in FDD.

In other cases, if the downlink HARQ process i is a HARQ process with the HARQ feedback function disabled, the HARQ RTT Timer is a predefined non-negative constant, for example, the value of the HARQ RTT Timer is fixed at 0.

Embodiment 2, corresponding to the aforementioned condition 2:
Optionally, Embodiment 2 may be applicable to eMTC terminals.

Step 1: The UE receives the DRX configuration of the network.

Step 2: The UE receives the PDCCH indication to schedule multiple downlink TBs, then the UE starts the HARQ RTT Timer corresponding to the downlink HARQ process used by the PDSCH of each of the multiple downlink TBs in the subframe where the last repeated transmission of the PDSCH of the last downlink TB of the multiple downlink TBs is received.

Step 3: If the UE is not configured with HARQ-ACK bundling, for the downlink HARQ process used by the PDSCH of each downlink TB in the multiple downlink TBs, the UE may determine the duration of its corresponding HARQ RTT Timer.

In some cases, if the downlink HARQ process is a HARQ process with the HARQ feedback function enabled, the duration of the HARQ RTT Timer may be determined in one of the following ways:
Mode 1: The duration of the HARQ RTT Timer is T2+ N_{TB} *N +RTT;
Mode 2: The duration of the HARQ RTT Timer is max{T2+ N_{TB} *N +RTT, 7+N_{TB} *N};
Mode 3: The duration of the HARQ RTT Timer is max{T2+(N_{TB} -1)*N+N1+RTT,7+ N_{TB} *N}, where T2 represents the time interval between the last repeated transmission of the PDSCH of the last TB of the N_{TB} TBs and the first repeated transmission of the HARQ feedback for the N_{TB} TBs.

Optionally, T2 may be a predefined value, for example, T2=4.

N1 represents the first repeated transmission of the PUCCH fed back for the last TB among the multiple TBs, and only valid uplink subframes will be included in N1. Optionally, the value of N1 is 1.

RTT represents the signal transmission delay between the UE and the network.

N represents the used PUCCH repetition factor.

Optionally, only valid uplink subframes determined by the fdd-UplinkSubframeBitmapBR are included in N.

N_{TB} is the number of TBs scheduled by the PDCCH.

In other cases, if the downlink HARQ process is a HARQ process with the HARQ feedback function disabled, the HARQ RTT Timer is a predefined non-negative constant, for example, the value of the HARQ RTT Timer is fixed at 0.

Embodiment 3, corresponding to the aforementioned condition 3:
Optionally, Embodiment 3 may be applicable to eMTC terminals.

Step 1: The UE receives the DRX configuration of the network.

Step 2: The UE receives the PDCCH indication to schedule multiple downlink TBs, then the UE starts the HARQ RTT Timer corresponding to the downlink HARQ process used by the PDSCH of each of the multiple downlink TBs in the subframe where the last repeated transmission of the PDSCH of the last downlink TB of the multiple downlink TBs is received, where the PDSCH is used to carry the downlink TB.

Step 3: If the UE is configured with HARQ-ACK bundling, then for the downlink HARQ process used by the PDSCH of each downlink TB in the multiple downlink TBs, the UE may determine the duration of its corresponding HARQ RTT Timer.

In some embodiments, if the downlink HARQ process adopted is a HARQ process with the HARQ feedback function enabled, the duration of the HARQ RTT Timer may be determined in one of the following ways:
Mode 1: The duration of the HARQ RTT Timer is T3+ k * N +RTT;
Mode 2: The duration of the HARQ RTT Timer is max{T3+ k * N +RTT, 7 + k * N};
Mode 3: The duration of the HARQ RTT Timer is max{T3+ (k-1) * N+N1 +RTT, 7 + k * N}, where T3 represents the time interval between the last repeated transmission of the PDSCH of the last TB of the N_{TB} TBs and the first repeated transmission of the HARQ feedback for the N_{TB} TBs.

Optionally, T3 may be a predefined value, for example, T3=4.

N1 represents the first repeated transmission of the PUCCH fed back for the last TB among the multiple TBs, and only valid uplink subframes will be included in N1. Optionally, the value of N1 is 1.

RTT represents the signal transmission delay between the UE and the network.

N represents the adopted PUCCH repetition factor.

Optionally, only valid uplink subframes determined by the fdd-UplinkSubframeBitmapBR are included in N.

K is the number of HARQ feedback groups (bundle). Optionally, k=ceiling(N_{TB}/M), where N_{TB} is the number of TBs scheduled by the PDCCH, M is the size of a single bundling, that is, the feedback of how many TBs a bundling includes, and ceiling means rounding up.

In some other embodiments, if the downlink HARQ process is a HARQ process with the HARQ feedback function disabled, the HARQ RTT Timer is a predefined non-negative constant, for example, the value of the HARQ RTT Timer is fixed at 0.

Embodiment 4, corresponding to the aforementioned condition 4:
Optionally, Embodiment 4 may be applicable to NB-IoT terminals.

Step 1: The UE receives the DRX configuration of the network.

Step 2: The UE receives the PDCCH indication to schedule a downlink TB, then the UE starts the HARQ RTT Timer corresponding to the downlink HARQ process i used by the PDSCH in the subframe where the last repeated transmission of the PDSCH of the downlink TB is received.

Step 3: The UE determines the duration of the HARQ RTT Timer corresponding to the downlink HARQ process i in step 2.

In some embodiments, if the downlink HARQ process i is a HARQ process with the HARQ feedback function enabled, the duration of the HARQ RTT Timer may be determined in one of the following ways:
Mode 1: The duration of the HARQ RTT Timer is max{T4+ TCK+ RTT+ΔPDCCH1, T4+3+ N+ΔPDCCH2}, where T_{CK} represents the time taken to send a feedback message at a time;
Mode 2: The duration of the HARQ RTT Timer is max{T4+N+ RTT+ΔPDCCH1, T4+3+ N+ΔPDCCH2}, and N represents the time taken to send a feedback message for N times;
Mode 3: The duration of the HARQ RTT Timer is T4+N+RTT+ΔPDCCH1, where T4 represents the time interval between the last subframe of PDSCH transmission and the first subframe of corresponding HARQ feedback.

RTT represents the signal transmission delay between the UE and the network.

N represents the HARQ feedback duration.

ΔPDCCH1 represents the time interval between the timing when the UE undergoes the first RTT after completing the HARQ feedback and the first subframe of the next PDCCH opportunity.

ΔPDCCH2 represents the time interval from the third subframe after the last subframe used for HARQ feedback to the first subframe of the next PDCCH opportunity.

In some other embodiments, if the downlink HARQ process i is a HARQ process with the HARQ feedback function disabled, the HARQ RTT Timer is a predefined non-negative constant, for example, the value of the HARQ RTT Timer is fixed at 0.

Embodiment 5, corresponding to the aforementioned condition 5:
Optionally, Embodiment 5 may be applicable to NB-IoT terminals.

Optionally, this embodiment may be applicable to the case where the terminal device is configured with HARQ-ACK bundling in an interleaving scenario.

Step 1: The UE receives the DRX configuration of the network.

Step 2: The UE receives the PDCCH indication to schedule multiple downlink TBs, then the UE starts the HARQ RTT Timer corresponding to the downlink HARQ process used by the PDSCH of each of the multiple downlink TBs in the subframe where the last repeated transmission of the PDSCH of the last downlink TB of the multiple downlink TBs is received.

Step 3: If the UE is configured with HARQ-ACK bundling, then for the downlink HARQ process used by the PDSCH of each downlink TB in the multiple downlink TBs, the UE may determine the duration of its corresponding HARQ RTT Timer.

In some cases, if the downlink HARQ process adopted is the HARQ process with the HARQ feedback function enabled, the duration of the HARQ RTT Timer may be determined in one of the following ways:
Mode 1: The duration of the HARQ RTT Timer is T5+N+RTT+ΔPDCCH1;
Mode 2: The duration of the HARQ RTT Timer is max{T5+N+RTT+ΔPDCCH1, T5+3+N+ΔPDCCH2}, where T5 represents the time interval between the last subframe for transmitting PDSCH and the first subframe of corresponding HARQ feedback.

RTT represents the signal transmission delay between the UE and the network.

N represents the HARQ feedback duration.
ΔPDCCH1 represents the time interval between the timing when the UE undergoes the first RTT after completing the HARQ feedback and the first subframe of the next PDCCH opportunity;
ΔPDCCH2 represents the time interval from the third subframe after the last subframe used for HARQ feedback to the first subframe of the next PDCCH opportunity.

In some other embodiments, if the downlink HARQ process is a HARQ process with the HARQ feedback function disabled, the HARQ RTT Timer is a predefined non-negative constant, for example, the value of the HARQ RTT Timer is fixed at 0.

Embodiment 6, corresponding to the aforementioned condition 6:
Optionally, Embodiment 6 may be applicable to NB-IoT terminals.

Optionally, this embodiment may be applicable to a non-interleaved scenario, or a situation in which a terminal device is not configured with HARQ-ACK bundling in an interleaved scenario.

Step 1: The UE receives the DRX configuration of the network.

Step 2: The UE receives the PDCCH indication to schedule multiple downlink TBs, then the UE starts the HARQ RTT Timer corresponding to the downlink HARQ process used by the PDSCH of each of the multiple downlink TBs in the subframe where the last repeated transmission of the PDSCH of the last downlink TB of the multiple downlink TBs is received.

Step 3: If the UE is not configured with HARQ-ACK bundling, for the downlink HARQ process used by the PDSCH of each downlink TB in the multiple downlink TBs, the UE may determine the duration of its corresponding HARQ RTT Timer.

In some cases, if the downlink HARQ process adopted is the HARQ process with the HARQ feedback function enabled, the duration of the HARQ RTT Timer may be determined in one of the following ways:
Mode 1: The duration of the HARQ RTT Timer is T6+2*N+RTT+ΔPDCCH1;
Mode 2: The duration of the HARQ RTT Timer is max{T6+2*N+RTT+ΔPDCCH1, T6+2*N+1+ΔPDCCH2};
Mode 3: The duration of the HARQ RTT Timer is max{T6+N+N1+RTT+ΔPDCCH1, T6+2*N+1+ΔPDCCH2}, where T6 represents the time interval between the last subframe for transmitting PDSCH and the first subframe of corresponding HARQ feedback.

RTT represents the signal transmission delay between the UE and the network.

N represents the HARQ feedback duration.

ΔPDCCH1 represents the time interval between the timing when the UE undergoes the first RTT after completing the HARQ feedback and the first subframe of the next PDCCH opportunity;

ΔPDCCH2 represents the time interval from the first subframe after the UE completes the HARQ feedback to the first subframe of the next PDCCH opportunity.

In other cases, if the downlink HARQ process is a HARQ process with the HARQ feedback function disabled, the HARQ RTT Timer is a predefined non-negative constant, for example, the value of the HARQ RTT Timer is fixed at 0.

Embodiment 7, corresponding to the aforementioned condition 7:
Optionally, Embodiment 7 may be applicable to eMTC terminals.

Step 1: The UE receives the DRX configuration of the network.

Step 2: The UE receives the PDCCH indication to schedule the uplink TB or the UE configures the authorizer to send the uplink TB, then the UE starts the UL HARQ RTT Timer corresponding to the uplink HARQ process used by the PDSCH of the uplink TB in the subframe where the last repeated transmission of the PDSCH of the uplink TB is completed.

Step 3: The UE may determine the duration of the UL HARQ RTT Timer corresponding to the uplink HARQ process in step 2.

In some embodiments, if the uplink HARQ process is a HARQ process with the HARQ function enabled, for the FDD system, the duration of the UL HARQ RTT Timer may be determined in one of the following ways:
Mode 1: The duration of UL HARQ RTT Timer is RTT;
Mode 2: UL HARQ RTT Timer is max{RTT, 4}.

For a TDD system, the duration of the UL HARQ RTT Timer may be determined in one of the following ways:
Mode 1: The duration of UL HARQ RTT Timer is RTT;
Mode 2: The duration of UL HARQ RTT Timer is max{RTT, k_{ULHARQRTT}}, where RTT represents a signal transmission delay between the UE and the network.

In some other embodiments, if the uplink HARQ process is a HARQ process with the HARQ feedback function disabled, the UL HARQ RTT Timer is a predefined non-negative constant, for example, the value of the UL HARQ RTT Timer is fixed at 3.

Embodiment 8, corresponding to the aforementioned condition 8:
Optionally, Embodiment 8 may be applicable to NB-IoT terminals.

Step 1: The UE receives the DRX configuration of the network.

Step 2: The UE receives the PDCCH indication to schedule an uplink TB, then the UE starts the UL HARQ RTT Timer corresponding to the uplink HARQ process used by the PDSCH of the uplink TB in the subframe where the last repeated transmission of the PDSCH of the uplink TB is completed.

Step 3: The UE may determine the duration of the HARQ RTT Timer corresponding to the uplink HARQ process in step 2.

In some embodiments, if the uplink HARQ process is a HARQ process with the HARQ feedback function enabled, the duration of the UL HARQ RTT Timer may be determined in one of the following ways:
Mode 1: The duration of the HARQ RTT Timer may be RTT+ΔPDCCH3;
Mode 2: The duration of the HARQ RTT Timer may be max{RTT+ ΔPDCCH3, 4+ ΔPDCCH4},where RTT represents the signal transmission time delay between the UE and the network.

ΔPDCCH3 represents the time interval between the timing after the first RTT elapses after the last subframe corresponding to the PUSCH transmission and the first subframe of the next PDCCH opportunity.

ΔPDCCH4 represents a time interval between 3ms after the next subframe of the last subframe corresponding to the PUSCH transmission and the first subframe of the next PDCCH opportunity.

In some other embodiments, if the uplink HARQ process is a HARQ process with the HARQ feedback function disabled, the ULHARQ RTT Timer is a predefined non-negative constant, for example, the value of the HARQ RTT Timer is fixed at 0.

Embodiment 9, corresponding to the aforementioned condition 9:
Optionally, Embodiment 9 may be applicable to NB-IoT terminals.

Step 1: The UE receives the DRX configuration of the network.

Step 2: The UE receives the PDCCH indication to schedule multiple uplink TBs, then the UE starts the UL HARQ RTT Timer corresponding to the uplink HARQ process used by the PUSCH of each of the multiple uplink TBs in the subframe where the last repeated transmission of the PUSCH of the last uplink TB of the multiple uplink TBs is sent.

Step 3: The UE may determine the duration of the UL HARQ RTT Timer corresponding to each uplink HARQ process in step 2.

In some cases, if the uplink HARQ process used is the HARQ process with the HARQ feedback function enabled, the duration of the UL HARQ RTT Timer may be determined in one of the following ways:
Mode 1: The duration of the HARQ RTT Timer may be RTT+ΔPDCCH3;
Mode 2: The duration of the HARQ RTT Timer may be max{RTT+ ΔPDCCH3, 1+ ΔPDCCH4},where RTT represents the signal transmission time delay between the UE and the network.

ΔPDCCH3 represents the time interval between the timing after the first RTT elapses after the last subframe corresponding to the PUSCH transmission and the first subframe of the next PDCCH opportunity.

ΔPDCCH4 represents the time interval between 3ms after the next subframe of the last subframe corresponding to the PUSCH transmission and the first subframe of the next PDCCH opportunity.

In some other embodiments, if the uplink HARQ process is a HARQ process with the HARQ feedback function disabled, the ULHARQ RTT Timer is a predefined non-negative constant, for example, the value of the HARQ RTT Timer is fixed at 0.

Based on the above technical solution, when the HARQ feedback state corresponding to the HARQ process is an open terminal state or a closed state, the terminal device or network device may respectively determine the duration of the HARQ RTT timer corresponding to the HARQ process used by the data channel according to the RTT or determine the duration as a preset value, which helps to take into account power saving of the terminal and the scheduling of the network.

The method embodiment of the present disclosure is described in detail above in conjunction with FIG. 3, and the device embodiment of the present disclosure is described in detail below in conjunction with FIG. 4 to FIG. 6. It should be understood that the device embodiment and the method embodiment correspond to each other, and similar descriptions in the method embodiment may serve as cross reference for the device embodiment.

FIG. 4 shows a schematic block diagram of a device 400 according to an embodiment of the present disclosure. As shown in FIG. 4, the device 400 includes: a processing unit 410, which determines the duration of the HARQ RTT timer corresponding to the first HARQ process according to the first RTT, or determines the duration of the HARQ RTT timer corresponding to the first HARQ process as a preset value, where the first HARQ process is the HARQ process used by the first data channel, and the first data channel is used to carry the first TB in at least one TB scheduled by the PDCCH, and the first RTT is determined according to a signal transmission delay between a terminal device and a network device, the device is a terminal device or a network device, and the device is a sending end or a receiving end of the first data channel.

Optionally, in some embodiments, the at least one TB is a downlink TB, the first HARQ process is a downlink HARQ process, and the processing unit 410 is specifically configured to: determine the duration of the HARQ RTT timer corresponding to the first HARQ process according to the first RTT and the first information; where the first information includes at least one of the following: the HARQ-ACK feedback delay of the at least one TB; the processing delay after the terminal device completes the HARQ-ACK feedback; a parameter of the number of times of repeated transmissions of feedback of the HARQ-ACK information corresponding to the at least one TB; the number of the at least one TB; whether the terminal device is configured for HARQ-ACK bundling; the number of TBs for HARQ-ACK bundling; the state of the HARQ feedback function corresponding to the first HARQ process; HARQ feedback duration, representing the total time taken to send one HARQ feedback information for multiple times; the time taken to send a HARQ feedback information at a time; the first PDCCH interval, representing the timing interval from the first timing to the first PDCCH opportunity after the first timing, the first timing is after the terminal device completes the HARQ feedback, and is spaced apart from the HARQ feedback by the first RTT; the second PDCCH interval, representing the time interval from the second timing to the first PDCCH opportunity after the second timing, the second timing is after the terminal device completes the HARQ feedback, and is spaced apart from by the HARQ feedback by the processing delay.

Optionally, in some embodiments, the processing unit 410 is further configured to: determine a first duration according to the first RTT and the first information; determine the duration of the HARQ RTT timer corresponding to the first HARQ process according to the first duration.

Optionally, in some embodiments, the processing unit 410 is further configured to: determine the first duration as the duration of the HARQ RTT timer corresponding to the first HARQ process; or determine the larger value among the first duration and the first preset duration as the duration of the HARQ RTT timer corresponding to the first HARQ process; where the first preset duration is determined according to the feedback delay of the at least one TB and the processing delay.

Optionally, in some embodiments, the at least one TB only includes the first TB, where the feedback delay of the at least one TB includes a first time interval, and the first time interval represents the time interval between the last transmission of the first TB and the first transmission of the HARQ feedback information corresponding to the first TB; the parameter of number of times of repeated transmission of feedback of the HARQ-ACK information corresponding to the at least one TB includes a first parameter and/or a second parameter, where the first parameter is used to indicate the first transmission of the PUCCH, the PUCCH is used to carry the HARQ feedback information corresponding to the first TB, and the second parameter is used to indicate the PUCCH repetition factor.

Optionally, in some embodiments, the processing unit 410 is further configured to: determine the first duration according to the first RTT, the first time interval, and the parameter of number of times of repeated transmission of feedback.

Optionally, in some embodiments, the first duration is equal to the sum of the first time interval, the first parameter, and the first RTT, or the first duration is equal to the sum of the first time interval, the second parameter and the first RTT; the first preset duration is equal to the feedback delay of the first TB and the processing delay.

Optionally, in some embodiments, the at least one TB includes multiple TBs, the multiple TBs include the first TB, and the terminal device is not configured with HARQ-ACK bundling, where the feedback delay of the at least one TB includes a second time interval, the second time interval represents the time interval between the last transmission of the last TB in the plurality of TBs and the first transmission of the HARQ feedback information corresponding to the plurality of TBs; the parameter of number of times of repeated transmission of feedback of the HARQ-ACK information corresponding to the at least one TB includes a first parameter and/or a second parameter, where the first parameter is used to indicate the first transmission of the PUCCH, the PUCCH is used to carry the HARQ feedback information corresponding to the last TB among the multiple TBs, and the second parameter is used to indicate the PUCCH repetition factor.

Optionally, in some embodiments, the processing unit 410 is further configured to: determine the first duration according to the first RTT, the number of the multiple TBs, the second time interval, and the parameter of number of times of repeated transmission of feedback.

Optionally, in some embodiments, the first duration is equal to T2+N_{TB}*N+RTT or T2+(N_{TB} -1)*N+N1+RTT, and the first preset duration is equal to 7+ N_{TB} *N; where RTT represents the first RTT, T2 represents the second time interval, N1 represents the first parameter, N represents the second parameter, and N_{TB} represents the number of the multiple TBs.

Optionally, in some embodiments, the at least one TB includes multiple TBs, the multiple TBs include the first TB, and the terminal device is configured with HARQ-ACK bundling, where the feedback delay of the at least one TB includes a third time interval, and the third time interval represents the time interval between the last transmission of the last TB in the multiple TBs and the first transmission of the HARQ feedback information corresponding to the multiple TBs; the parameter of number of times of repeated transmission of feedback of the HARQ-ACK information corresponding to the at least one TB includes a first parameter and/or a second parameter, where the first parameter is used to indicate the first transmission of the PUCCH, the PUCCH is used to carry the HARQ feedback information of the last bundling feedback among the plurality of TBs, and the second parameter is used to indicate the PUCCH repetition factor.

Optionally, in some embodiments, the processing unit 410 is further configured to: determine the duration of the HARQ RTT timer corresponding to the first HARQ process according to the first RTT, the third time interval, the parameter of number of times of repeated transmission of feedback, and the number of groups for performing HARQ-ACK bundling on the multiple TBs.

Optionally, in some embodiments, the first duration is equal to T3+k*N+RTT, or T3+(k-1)*N+N1+RTT, and the first preset duration is equal to 7+k* N; where RTT represents the first RTT, T3 represents the third time interval, N1 represents the first parameter, N represents the second parameter, k represents the number of groups for performing HARQ-ACK bundling on the multiple TBs.

Optionally, in some embodiments, the terminal device is an enhanced machine type communication (eMTC) terminal.

Optionally, in some embodiments, the at least one TB only includes the first TB, and the processing unit 410 is further configured to: determine the first duration according to the first RTT, a fourth time interval, the HARQ feedback duration, and the first PDCCH interval, where the fourth time interval represents the time interval between the last transmission of the first TB and the first transmission of the HARQ feedback information corresponding to the first TB.

Optionally, in some embodiments, the first duration is equal to T4+1+RTT+ΔPDCCH1, or T4+N+RTT+ΔPDCCH1, and the first preset duration is equal to k+3+N+ΔPDCCH2; where RTT represents the first RTT, T4 represents the fourth time interval, N represents the HARQ feedback duration, ΔPDCCH1 represents the first PDCCH interval, and ΔPDCCH2 represents the second PDCCH interval.

Optionally, in some embodiments, the at least one TB includes multiple TBs, the multiple TBs include the first TB, the terminal device is configured with HARQ-ACK bundling, and the processing unit 410 is further configured to: determine the first duration according to the first RTT, a fifth time interval, the HARQ feedback duration, and the first PDCCH interval, where the fifth time interval represents a time interval between the last transmission of the multiple TBs and the first transmission of the HARQ feedback information corresponding to the multiple TBs.

Optionally, in some embodiments, the first duration is equal to T5+N+RTT+ΔPDCCH1, and the first preset duration is equal to T5+3+N+ΔPDCCH2; where RTT represents the first RTT, T5 represents the fifth time interval, N represents the HARQ feedback duration, ΔPDCCH1 represents the first PDCCH interval, and ΔPDCCH2 represents the second PDCCH interval.

Optionally, in some embodiments, the at least one TB includes multiple TBs, the multiple TBs include the first TB, the terminal device is not configured with HARQ-ACK bundling, and the processing unit 410 is further configured to: determine the first duration according to the first RTT, a sixth time interval, the HARQ feedback duration, the time taken for a single transmission of one HARQ feedback information, and the first PDCCH interval; or determine the first duration according to the first RTT, the sixth time interval, the HARQ feedback duration, and the first PDCCH interval; where the sixth time interval represents the time interval between the last transmission of the plurality of TBs and the first transmission of the HARQ feedback information corresponding to the multiple TBs.

Optionally, the first duration is equal to T6+2N+RTT+ΔPDCCH1, or T6+N+N1+RTT+ΔPDCCH1, and the first preset duration is equal to k+2N+1+ΔPDCCH2; where RTT represents the first RTT, T6 represents the sixth time interval, N represents the HARQ feedback duration, ΔPDCCH1 represents the first PDCCH interval, ΔPDCCH2 represents the second PDCCH interval, N1 represents the time required from the completion of the transmission of the first HARQ feedback information to the completion of the first transmission of the second HARQ feedback information.

Optionally, in some embodiments, the terminal device is a NB-IoT terminal.

Optionally, the at least one TB is an uplink TB, and the first HARQ process is an uplink HARQ process.

Optionally, in some embodiments, the duration of the HARQ RTT timer corresponding to the first HARQ process is the first RTT, or the larger value among the first RTT and the second preset duration.

Optionally, in some embodiments, the terminal device is an eMTC terminal.

Optionally, in some embodiments, the processing unit 410 is further configured to: determine the duration of the HARQ RTT timer corresponding to the first HARQ process according to the first RTT and the second information; where the second information includes at least one of the following: a third PDCCH interval, representing the time interval from the third timing to the first PDCCH opportunity after the third timing, and the third timing is after the timing when the terminal device finishes transmitting the data channel corresponding to the at least one TB, and is spaced apart from the timing by the first RTT; a fourth PDCCH interval, representing the time interval from the fourth timing to the first PDCCH opportunity after the fourth timing, the fourth timing is after the completion of transmission of the data channel corresponding to the at least one TB, and is spaced apart from the completion by the processing delay.

Optionally, in some embodiments, the processing unit 410 is further configured to: determine a second duration according to the first RTT and the second information; determine the duration of the HARQ RTT timer corresponding to the first HARQ process according to the second duration.

Optionally, in some embodiments, the step of determining the duration of the HARQ RTT timer corresponding to the first HARQ process according to the second duration includes: determining the second duration as the duration of the HARQ RTT timer corresponding to the first HARQ process; or determining the larger value among the second duration and the second preset duration as the duration of the HARQ RTT timer corresponding to the first HARQ process; where the second preset duration is determined according to the processing delay.

Optionally, in some embodiments, the at least one TB includes only the first TB, and the second duration is equal to the sum of the first RTT and the third PDCCH interval; the second preset duration is equal to the sum of 4 and the fourth PDCCH interval.

Optionally, in some embodiments, the at least one TB includes multiple TBs, and the second duration is equal to a sum of the first RTT and the third PDCCH interval; the second preset duration is equal to the sum of 1 and the fourth PDCCH interval.

Optionally, in some embodiments, the terminal device is an NB-IoT terminal.

Optionally, in some embodiments, the processing unit 410 is further configured to: when the state of the HARQ feedback function corresponding to the first HARQ process is to enable the HARQ feedback function, determine the duration of the HARQ RTT timer corresponding to the first HARQ process according to the first RTT.

Optionally, in some embodiments, the processing unit 410 is further configured to: when the state of the HARQ feedback function corresponding to the first HARQ process is to disable the HARQ feedback function, the first device determines the duration of the HARQ RTT timer corresponding to the first HARQ process as a preset value.

Optionally, in some embodiments, the first RTT is determined according to a TA of the terminal device.

It should be understood that the terminal device 400 in the embodiment of the present disclosure may correspond to the terminal device in the method embodiment of the present disclosure, and the above-mentioned and other operations and/or functions of various units in the terminal device 400 are set for realizing the corresponding processes of the terminal device or the network device in the method 200 shown in FIG. 3. For conciseness, further details will not be repeated here.

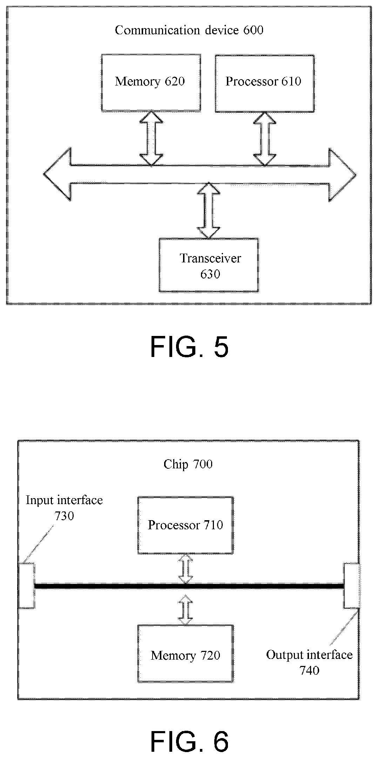

FIG. 5 is a schematic structural diagram of a communication device 600 provided in an embodiment of the present disclosure. The communication device 600 shown in FIG. 5 includes a processor 610, and the processor 610 may invoke and run a computer program from a memory, so as to implement the method in the embodiments of the present disclosure.

Optionally, as shown in FIG. 5, the communication device 600 may further include a memory 620, where the processor 610 may invoke and run a computer program from the memory 620, so as to implement the method in the embodiments of the present disclosure. The memory 620 may be an independent device independent of the processor 610, or may be integrated in the processor 610.

Optionally, as shown in FIG. 5, the communication device 600 may further include a transceiver 630, and the processor 610 may control the transceiver 630 to communicate with other devices, specifically, to send information or data to other devices, or receive information or data sent by other devices.

The transceiver 630 may include a transmitter and a receiver. The transceiver 630 may further include antennas, and the number of antennas may be one or more.

Optionally, the communication device 600 may specifically be the network device in the embodiment of the present disclosure, and the communication device 600 may implement the corresponding processes implemented by the network device in various methods in the embodiments of the present disclosure. For conciseness, details are not repeated here.

Optionally, the communication device 600 may specifically be the mobile terminal/terminal device in the embodiments of the present disclosure, and the communication device 600 may implement the corresponding processes implemented by the mobile terminal/terminal device in various methods in the embodiments of the present disclosure. For conciseness, details will not be repeated here.

FIG. 6 is a schematic structural diagram of a chip according to an embodiment of the present disclosure. The chip 700 shown in FIG. 6 includes a processor 710, and the processor 710 may invoke and run a computer program from a memory, so as to implement the method in the embodiment of the present disclosure.

Optionally, as shown in FIG. 6, the chip 700 may further include a memory 720, where the processor 710 may invoke and run a computer program from the memory 720, so as to implement the method in the embodiment of the present disclosure. The memory 720 may be an independent device independent of the processor 710, or may be integrated in the processor 710.

Optionally, the chip 700 may further include an input interface 730, wherein the processor 710 may control the input interface 730 to communicate with other devices or chips, specifically, may obtain information or data sent by other devices or chips.

Optionally, the chip 700 may further include an output interface 740, where the processor 710 may control the output interface 740 to communicate with other devices or chips, specifically, may output information or data to other devices or chips.

Optionally, the chip may be applied to the network device in the embodiment of the present disclosure, and the chip may implement the corresponding processes implemented by the network device in various methods in the embodiments of the present disclosure. For conciseness, details are not repeated here.

Optionally, the chip may be applied to the mobile terminal/terminal device in the embodiments of the present disclosure, and the chip may implement the corresponding processes implemented by the mobile terminal/terminal device in the various methods in the embodiments of the present disclosure. For conciseness, details are not repeated here.

It should be understood that the chip mentioned in the embodiments of the present disclosure may also be called a system-on-a-chip or system-on-chip.

It should be understood that the processor in the embodiment of the present disclosure may be an integrated circuit chip, which has a signal processing capability. In the implementation process, various steps of the above-mentioned method embodiments may be completed by an integrated logic circuit of hardware in a processor or instructions in the form of software. The above-mentioned processor may be a general-purpose processor, a digital signal processor (DSP), an application specific integrated circuit (ASIC), a field programmable gate array (FPGA), or other programmable logic devices, discrete gate or transistor logic devices, discrete hardware components. Various methods, steps, and logic block diagrams disclosed in the embodiments of the present disclosure may be implemented or executed. A general-purpose processor may be a microprocessor, or the processor may be any conventional processor, or the like. The steps of the method disclosed in connection with the embodiments of the present disclosure may be directly implemented by a hardware decoding processor, or implemented by a combination of hardware and software modules in the decoding processor. The software module may be located in a well-developed storage medium in the field such as a random access memory, a flash memory, a read-only memory, a programmable read-only memory or an electrically erasable programmable memory, register. The storage medium is located in the memory, and the processor reads the information in the memory, and completes the steps of the above method in combination with its hardware.

It may be understood that the memory in the embodiments of the present disclosure may be a volatile memory or a nonvolatile memory, or may include both volatile and nonvolatile memories. Among the two types of memories, the non-volatile memory may be a read-only memory (ROM), a programmable ROM (PROM), an erasable PROM (EPROM), an electrically EPROM (EEPROM) or a flash memory. The volatile memory may be a RAM, which acts as an external cache. By way of illustration and not limitation, many forms of RAM are available such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory of the systems and methods described herein is intended to include, but not be limited to, these and any other suitable types of memory.

It should be understood that the above-mentioned memory is illustrative but not restrictive. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM), etc. That is, the memory in the embodiments of the present disclosure is intended to include, but not be limited to, these and any other suitable types of memory.

An embodiment of the present disclosure further provides a computer-readable storage medium for storing computer programs.

Optionally, the computer-readable storage medium may be applied to the network device in the embodiments of the present disclosure, and the computer program enables the computer to execute the corresponding processes implemented by the network device in various methods of the embodiments of the present disclosure. For conciseness, details are not repeated here.

Optionally, the computer-readable storage medium may be applied to the mobile terminal/terminal device in the embodiments of the present disclosure, and the computer program enables the computer to execute the corresponding processes implemented by the mobile terminal/terminal device in the various methods of the embodiments of the present disclosure. For conciseness, details are not repeated here.

An embodiment of the present disclosure further provides a computer program product, including computer program instructions.

Optionally, the computer program product may be applied to the network device in the embodiments of the present disclosure, and the computer program instructions enable the computer to execute the corresponding process implemented by the network device in various methods of the embodiments of the present disclosure. For conciseness, details are not repeated here.

Optionally, the computer program product may be applied to the mobile terminal/terminal device in the embodiments of the present disclosure, and the computer program instructions enable the computer to execute the corresponding processes implemented by the mobile terminal/terminal device in various methods of the embodiments of the present disclosure. For conciseness, details are not repeated here.

An embodiment of the present disclosure further provides a computer program.

Optionally, the computer program may be applied to the network device in the embodiments of the present disclosure. When the computer program is run on the computer, the computer is enabled to execute the corresponding process implemented by the network device in various methods in the embodiments of the present disclosure. For conciseness, details are not repeated here.

Optionally, the computer program may be applied to the mobile terminal/terminal device in the embodiments of the present disclosure. When the computer program is run on the computer, the computer is enabled to execute the corresponding process implemented by the mobile terminal/terminal device in various methods in the embodiments of the present disclosure. For conciseness, details are not repeated here.

Those skilled in the art can appreciate that the units and algorithm steps of the examples described in conjunction with the embodiments disclosed herein can be implemented by electronic hardware, or a combination of computer software and electronic hardware. Whether these functions are executed by hardware or software depends on the specific application and design constraints of the technical solution. Those skilled in the art may use different methods to implement the described functions for each specific application, but such implementation should not be regarded as exceeding the scope of the present disclosure.

Those skilled in the art can clearly understand that for the convenience and conciseness of the description, the specific operation process of the above-described system, device and unit may be derived from the corresponding process in the foregoing method embodiment, and details will not be repeated here.

In the several embodiments provided in this disclosure, it should be understood that the disclosed systems, devices and methods may be implemented in other ways. For example, the device embodiments described above are only illustrative. For example, the division of the units is only a logical function division. In actual implementation, there may be other division methods. On the other hand, the mutual coupling or direct coupling or communication connection shown or discussed may be performed through some interfaces, and the indirect coupling or communication connection of devices or units may be performed in electrical, mechanical or other forms.

The units described as separate components may or may not be physically separated, and the components shown as units may or may not be physical units, that is, they may be located in one place, or may be distributed to multiple network units. Part or all of the units may be selected according to actual needs to achieve the purpose of the solution of the embodiments.

In addition, each functional unit in various embodiments of the present disclosure may be integrated into one processing unit, each unit may exist separately physically, or two or more units may be integrated into one unit.

If the functions described above are realized in the form of software function units and sold or used as independent products, they can be stored in a computer-readable storage medium. Based on this understanding, the technical solution of the present disclosure is essentially or the part that contributes to the prior art or the part of the technical solution can be embodied in the form of a software product, and the computer software product is stored in a storage medium, including several instructions are adopted to enable a computer device (which may be a personal computer, a server, or a network device, etc.) to execute all or part of the steps of the methods described in the various embodiments of the present disclosure. The aforementioned storage media include: U disk, mobile hard disk, ROM, RAM, magnetic disk or optical disk, and other media that can store program codes.

## Claims

1. A wireless communication method (200), comprising
determining (S210), by a first device, a duration of a hybrid automatic repeat request, HARQ, round trip time, RTT, timer corresponding to a first HARQ process according to a first RTT, wherein the first HARQ process is an HARQ process used by a first data channel, and the first data channel is used for carrying a first transmission block, TB, in at least one TB scheduled by a physical downlink control channel, PDCCH, the first RTT is determined according to a signal transmission delay between a terminal device and a network device, the first device is the network device, and the first device is a sending end of the first data channel,
wherein the first RTT is determined according to a time advance, TA, of the terminal device, and the terminal device and the network device belong to a non-terrestrial network, NTN, system,
wherein the terminal device activates the HARQ RTT timer after completing an uplink transmission or a downlink reception, the network device performs data scheduling after the HART RTT timer expires, and the network device does not perform the data scheduling before the HART RTT timer expires;
wherein the at least one TB is a downlink TB, the first HARQ process is a downlink HARQ process, and the step of determining, by the first device, the duration of the HARQ RTT timer corresponding to the first HARQ process according to the first RTT comprises
determining, according to the first RTT and first information, the duration of the HARQ RTT timer corresponding to the first HARQ process, wherein the first information comprises a parameter of the number of times of repeated transmission of a feedback of HARQ-ACK information corresponding to the at least one TB;
wherein the at least one TB only comprises a first TB, wherein the feedback delay of the at least one TB comprises a first time interval, and the first time interval represents a time interval between a last transmission of the first TB and a first transmission of a HARQ feedback information corresponding to the first TB;
wherein the parameter of the number of times of the repeated transmission of the feedback of the HARQ-ACK information corresponding to the at least one TB comprises a second parameter, the second parameter is used to indicate a PUCCH repetition factor;
wherein the step of determining the duration of the HARQ RTT timer corresponding to the first HARQ process according to the first RTT and the first information comprises:
determining a first duration according to the first RTT and the first information;
determining the duration of the HARQ RTT timer corresponding to the first HARQ process according to the first duration;
wherein the step of determining the duration of the HARQ RTT timer corresponding to the first HARQ process according to the first duration comprises:
determining a larger value among the first duration and a first preset duration as the duration of the HARQ RTT timer corresponding to the first HARQ process;
wherein the first preset duration is determined according to a feedback delay of the at least one TB and the processing delay;
wherein the step of determining the first duration according to the first RTT and the first information comprises:
determining the first duration according to the first RTT, the first time interval, and the parameter of the number of times of the repeated transmission of the feedback, wherein the first duration is equal to a sum of the first time interval, the first parameter, and the first RTT, or the first duration is equal to a sum of the first time interval, the second parameter and the first RTT;
the first preset duration is equal to the feedback delay of the first TB and the processing delay.

2. The method according to claim 1, wherein the first information further comprises a state of a HARQ feedback function corresponding to the first HARQ process, and the step of determining, by the first device, the duration of the HARQ RTT timer corresponding to the first HARQ process according to the first RTT comprises:
in a case where a state of a HARQ feedback function corresponding to the first HARQ process is enabled, determining the duration of the HARQ RTT timer corresponding to the first HARQ process according to the first RTT;
in a case where the state of the HARQ feedback function corresponding to the first HARQ process is disabled, the first device determines the duration of the HARQ RTT timer corresponding to the first HARQ process as the preset value.

3. A wireless communication device (400), comprising:
a processing unit (410), which determines a duration of a HARQ RTT timer corresponding to a first HARQ process according to a first RTT, wherein the first HARQ process is a HARQ process used by a first data channel, and the first data channel is used to carry a first TB in at least one TB scheduled by a PDCCH, and the first RTT is determined according to a signal transmission delay between a terminal device and a network device, the wireless communication device is the network device, and the wireless communication device is a sending end of the first data channel,
wherein the first RTT is determined according to a time advance, TA, of the terminal device, and the terminal device and the network device belong to a non-terrestrial network, NTN, system,
wherein the terminal device activates the HARQ RTT timer after completing an uplink transmission or a downlink reception, the network device performs data scheduling after the HART RTT timer expires, and the network device does not perform the data scheduling before the HART RTT timer expires;
wherein the at least one TB is a downlink TB, the first HARQ process is a downlink HARQ process, and the processing unit (410) determines, according to the first RTT and first information, the duration of the HARQ RTT timer corresponding to the first HARQ process, wherein the first information comprises a parameter of the number of times of repeated transmission of a feedback of HARQ-ACK information corresponding to the at least one TB;
wherein the at least one TB only comprises a first TB, wherein the feedback delay of the at least one TB comprises a first time interval, and the first time interval represents a time interval between a last transmission of the first TB and a first transmission of a HARQ feedback information corresponding to the first TB;
wherein the parameter of the number of times of the repeated transmission of the feedback of the HARQ-ACK information corresponding to the at least one TB comprises a second parameter, the second parameter is used to indicate a PUCCH repetition factor;
wherein determining the duration of the HARQ RTT timer corresponding to the first HARQ process according to the first RTT and the first information comprises:
determining a first duration according to the first RTT and the first information;
determining the duration of the HARQ RTT timer corresponding to the first HARQ process according to the first duration;
wherein determining the duration of the HARQ RTT timer corresponding to the first HARQ process according to the first duration comprises:
determining a larger value among the first duration and a first preset duration as the duration of the HARQ RTT timer corresponding to the first HARQ process;
wherein the first preset duration is determined according to a feedback delay of the at least one TB and the processing delay;
wherein determining the first duration according to the first RTT and the first information comprises:
determining the first duration according to the first RTT, the first time interval, and the parameter of the number of times of the repeated transmission of the feedback, wherein the first duration is equal to a sum of the first time interval, the first parameter, and the first RTT, or the first duration is equal to a sum of the first time interval, the second parameter and the first RTT;
the first preset duration is equal to the feedback delay of the first TB and the processing delay.

## Patentansprüche

1. Drahtloses Kommunikationsverfahren (200), das Folgendes umfasst:
Bestimmen (S210) einer Dauer eines Zeitmessers der Paketumlaufzeit, RTT, einer automatischen Hybridwiederholanforderung, HARQ, die einem ersten HARQ-Prozess entspricht, in Übereinstimmung mit einer ersten RTT durch eine erste Vorrichtung, wobei der erste HARQ-Prozess ein HARQ-Prozess ist, der durch einen ersten Datenkanal verwendet wird, und wobei der erste Datenkanal zum Übermitteln eines ersten Übertragungsblocks, TB, in wenigstens einem TB, der durch einen physikalischen Abwärtsstreckensteuerkanal, PDCCH, geplant wird, verwendet wird, wobei die erste RTT in Übereinstimmung mit einer Signalübertragungsverzögerung zwischen einer Endgerätvorrichtung und einer Netzvorrichtung bestimmt wird, wobei die erste Vorrichtung die Netzvorrichtung ist und wobei die erste Vorrichtung eine Sendeseite des ersten Datenkanals ist,
wobei die erste RTT in Übereinstimmung mit einem Zeitfortschritt, TA, der Endgerätvorrichtung bestimmt wird und wobei die Endgerätvorrichtung und die Netzvorrichtung zu einem nichtterrestrischen Netzsystem, NTN-System, gehören,
wobei die Endgerätvorrichtung den HARQ-RTT-Zeitmesser nach Abschluss einer Aufwärtsstreckensendung oder eines Abwärtsstreckenempfangs aktiviert, wobei die Netzvorrichtung eine Datenplanung ausführt, nachdem der HARQ-RTT-Zeitmesser abgelaufen ist, und wobei die Netzvorrichtung die Datenplanung nicht ausführt, bevor der HARQ-RTT-Zeitmesser abgelaufen ist;
wobei der wenigstens eine TB ein Abwärtsstrecken-TB ist, wobei der erste HARQ-Prozess ein Abwärtsstrecken-HARQ-Prozess ist und wobei der Schritt des Bestimmens der Dauer des HARQ-RTT-Zeitmessers, die dem ersten HARQ-Prozess entspricht, in Übereinstimmung mit der ersten RTT durch die erste Vorrichtung Folgendes umfasst:
Bestimmen der Dauer des HARQ-RTT-Zeitmessers, die dem ersten HARQ-Prozess entspricht, in Übereinstimmung mit der ersten RTT und ersten Informationen, wobei die ersten Informationen einen Parameter der Anzahl der wiederholten Übertragungen einer Rückmeldung von HARQ-ACK-Informationen, die dem wenigstens einen TB entsprechen, umfassen;
wobei der wenigstens eine TB nur einen ersten TB umfasst, wobei die Rückmeldungsverzögerung des wenigstens einen TB eine erste Zeitspanne umfasst und wobei die erste Zeitspanne eine Zeitspanne zwischen einer letzten Übertragung des ersten TB und einer ersten Übertragung von HARQ-Rückmeldungsinformationen, die dem ersten TB entsprechen, repräsentiert;
wobei der Parameter der Anzahl der wiederholten Übertragungen der Rückmeldung der HARQ-ACK-Informationen, die dem wenigstens einen TB entsprechen, einen zweiten Parameter umfasst, wobei der zweite Parameter zum Angeben eines PUCCH-Wiederholungsfaktors verwendet wird;
wobei der Schritt des Bestimmens der Dauer des HARQ-RTT-Zeitmessers, die dem ersten HARQ-Prozess entspricht, in Übereinstimmung mit der ersten RTT und den ersten Informationen Folgendes umfasst:
Bestimmen einer ersten Dauer in Übereinstimmung mit der ersten RTT und den ersten Informationen;
Bestimmen der Dauer des HARQ-RTT-Zeitmessers, die dem ersten HARQ-Prozess entspricht, in Übereinstimmung mit der ersten Dauer;
wobei der Schritt des Bestimmens der Dauer des HARQ-RTT-Zeitmessers, die dem ersten HARQ-Prozess entspricht, in Übereinstimmung mit der ersten Dauer Folgendes umfasst:
Bestimmen eines größeren Werts unter der ersten Dauer und einer ersten im Voraus festgelegten Dauer als die Dauer des HARQ-RTT-Zeitmessers, die dem ersten HARQ-Prozess entspricht;
wobei die erste im Voraus festgelegte Dauer in Übereinstimmung mit einer Rückmeldungsverzögerung des wenigstens einen TB und der Verarbeitungsverzögerung bestimmt wird;
wobei der Schritt des Bestimmens der ersten Dauer in Übereinstimmung mit der ersten RTT und mit den ersten Informationen Folgendes umfasst:
Bestimmen der ersten Dauer in Übereinstimmung mit der ersten RTT, der ersten Zeitspanne und dem Parameter der Anzahl der wiederholten Übertragungen der Rückmeldung, wobei die erste Dauer gleich einer Summe der ersten Zeitspanne, des ersten Parameters und der ersten RTT ist oder wobei die erste Dauer gleich einer Summe der ersten Zeitspanne, des zweiten Parameters und der ersten RTT ist;
wobei die erste im Voraus festgelegte Dauer gleich der Rückmeldungsverzögerung des ersten TB und der Verarbeitungsverzögerung ist.

2. Verfahren nach Anspruch 1, wobei die ersten Informationen ferner einen Zustand einer HARQ-Rückmeldungsfunktion, die dem ersten HARQ-Prozess entspricht, umfassen und wobei der Schritt des Bestimmens der Dauer des HARQ-RTT-Zeitmessers, die dem ersten HARQ-Prozess entspricht, in Übereinstimmung mit der ersten RTT durch die erste Vorrichtung Folgendes umfasst:
Bestimmen der Dauer des HARQ-RTT-Zeitmessers, die dem ersten HARQ-Prozess entspricht, in Übereinstimmung mit der ersten RTT, falls ein Zustand einer HARQ-Rückmeldungsfunktion, die dem ersten HARQ-Prozess entspricht, freigegeben ist;
dass die erste Vorrichtung die Dauer des HARQ-RTT-Zeitmessers, die dem ersten HARQ-Prozess entspricht, als den im Voraus festgelegten Wert bestimmt, falls der Zustand der HARQ-Rückmeldungsfunktion, die dem ersten HARQ-Prozess entspricht, gesperrt ist.

3. Drahtlose Kommunikationsvorrichtung (400), die Folgendes umfasst:
eine Verarbeitungseinheit (410), die eine Dauer eines HARQ-RTT-Zeitmessers, die einem ersten HARQ-Prozess entspricht, in Übereinstimmung mit einer ersten RTT bestimmt, wobei der erste HARQ-Prozess ein HARQ-Prozess ist, der durch einen ersten Datenkanal verwendet wird, und wobei der erste Datenkanal zum Übermitteln eines ersten TB in wenigstens einem TB, der durch einen PDCCH geplant wird, verwendet wird, wobei die erste RTT in Übereinstimmung mit einer Signalübertragungsverzögerung zwischen einer Endgerätvorrichtung und einer Netzvorrichtung bestimmt wird, wobei die drahtlose Kommunikationsvorrichtung die Netzvorrichtung ist und wobei die drahtlose Kommunikationsvorrichtung eine Sendeseite des ersten Datenkanals ist,
wobei die erste RTT in Übereinstimmung mit einem Zeitfortschritt, TA, der Endgerätvorrichtung bestimmt wird und wobei die Endgerätvorrichtung und die Netzvorrichtung zu einem nichtterrestrischen Netzsystem, NTN-System, gehören,
wobei die Endgerätvorrichtung den HARQ-RTT-Zeitmesser nach Abschluss einer Aufwärtsstreckensendung oder eines Abwärtsstreckenempfangs aktiviert, wobei die Netzvorrichtung eine Datenplanung ausführt, nachdem der HARQ-RTT-Zeitmesser abgelaufen ist, und wobei die Netzvorrichtung die Datenplanung nicht ausführt, bevor der HARQ-RTT-Zeitmesser abgelaufen ist;
wobei der wenigstens eine TB ein Abwärtsstrecken-TB ist, wobei der erste HARQ-Prozess ein Abwärtsstrecken-HARQ-Prozess ist und wobei die Verarbeitungseinheit (410) die Dauer des HARQ-RTT-Zeitmessers, die dem ersten HARQ-Prozess entspricht, in Übereinstimmung mit der ersten RTT und ersten Informationen bestimmt, wobei die ersten Informationen einen Parameter der Anzahl der wiederholten Übertragungen einer Rückmeldung von HARQ-ACK-Informationen, die dem wenigstens einen TB entsprechen, umfassen;
wobei der wenigstens eine TB nur einen ersten TB umfasst, wobei die Rückmeldungsverzögerung des wenigstens einen TB eine erste Zeitspanne umfasst und wobei die erste Zeitspanne eine Zeitspanne zwischen einer letzten Übertragung des ersten TB und einer ersten Übertragung von HARQ-Rückmeldungsinformationen, die dem ersten TB entsprechen, repräsentiert;
wobei der Parameter der Anzahl der wiederholten Übertragungen der Rückmeldung der HARQ-ACK-Informationen, die dem wenigstens einen TB entsprechen, einen zweiten Parameter umfasst, wobei der zweite Parameter zum Angeben eines PUCCH-Wiederholungsfaktors verwendet wird;
wobei das Bestimmen der Dauer des HARQ-RTT-Zeitmessers, die dem ersten HARQ-Prozess entspricht, in Übereinstimmung mit der ersten RTT und den ersten Informationen Folgendes umfasst:
Bestimmen einer ersten Dauer in Übereinstimmung mit der ersten RTT und den ersten Informationen;
Bestimmen der Dauer des HARQ-RTT-Zeitmessers, die dem ersten HARQ-Prozess entspricht, in Übereinstimmung mit der ersten Dauer;
wobei das Bestimmen der Dauer des HARQ-RTT-Zeitmessers, die dem ersten HARQ-Prozess entspricht, in Übereinstimmung mit der ersten Dauer Folgendes umfasst:
Bestimmen eines größeren Werts unter der ersten Dauer und einer ersten im Voraus festgelegten Dauer als die Dauer des HARQ-RTT-Zeitmessers, die dem ersten HARQ-Prozess entspricht;
wobei die erste im Voraus festgelegte Dauer in Übereinstimmung mit einer Rückmeldungsverzögerung des wenigstens einen TB und der Verarbeitungsverzögerung bestimmt wird;
wobei das Bestimmen der ersten Dauer in Übereinstimmung mit der ersten RTT und mit den ersten Informationen Folgendes umfasst:
Bestimmen der ersten Dauer in Übereinstimmung mit der ersten RTT, der ersten Zeitspanne und dem Parameter der Anzahl der wiederholten Übertragungen der Rückmeldung, wobei die erste Dauer gleich einer Summe der ersten Zeitspanne, des ersten Parameters und der ersten RTT ist oder wobei die erste Dauer gleich einer Summe der ersten Zeitspanne, des zweiten Parameters und der ersten RTT ist;
wobei die erste im Voraus festgelegte Dauer gleich der Rückmeldungsverzögerung des ersten TB und der Verarbeitungsverzögerung ist.

## Revendications

1. Procédé (200) de communication sans fil, comportant
la détermination (S210), par un premier dispositif, d'une durée d'un temporisateur de temps d'aller et retour, RTT, de demande de répétition automatique hybride, HARQ, correspondant à un premier processus de HARQ d'après un premier RTT, le premier processus de HARQ étant un processus de HARQ utilisé par un premier canal de données, et le premier canal de données étant utilisé pour transporter un premier bloc de transmission, TB, dans au moins un TB programmé par un canal physique de commande de liaison descendante, PDCCH, le premier RTT étant déterminé d'après un temps de propagation de signal entre un dispositif terminal et un dispositif de réseau, le premier dispositif étant le dispositif de réseau, et le premier dispositif étant une extrémité émettrice du premier canal de données,
le premier RTT étant déterminé d'après une avance temporelle, TA, du dispositif terminal, et le dispositif terminal et le dispositif de réseau appartenant à un système de réseau non terrestre, NTN,
le dispositif terminal activant le temporisateur de RTT de HARQ après avoir achevé une émission de liaison montante ou une réception de liaison descendante, le dispositif de réseau effectuant une programmation de données après l'expiration du temporisateur de RTT de HARQ, et le dispositif de réseau n'effectuant pas la programmation de données avant l'expiration du temporisateur de RTT de HARQ ;
le ou les TB étant un TB de liaison descendante, le premier processus de HARQ étant un processus de HARQ de liaison descendante, et l'étape de détermination, par le premier dispositif, de la durée du temporisateur de RTT de HARQ correspondant au premier processus de HARQ d'après le premier RTT comportant
la détermination, d'après le premier RTT et des premières informations, de la durée du temporisateur de RTT de HARQ correspondant au premier processus de HARQ, les premières informations comportant un paramètre du nombre de fois de transmission répétée d'une rétroaction d'information de HARQ-ACK correspondant au(x) TB ;
le ou les TB ne comportant qu'un premier TB, le retard de rétroaction du ou des TB comportant un premier intervalle de temps, et le premier intervalle de temps représentant un intervalle de temps entre une dernière transmission du premier TB et une première transmission d'une information de rétroaction de HARQ correspondant au premier TB ;
le paramètre du nombre de fois de la transmission répétée de la rétroaction de l'information de HARQ-ACK qui correspond au(x) TB comportant un second paramètre, le second paramètre étant utilisé pour indiquer un facteur de répétition de PUCCH ;
l'étape de détermination de la durée du temporisateur de RTT de HARQ qui correspond au premier processus de HARQ d'après le premier RTT et les premières informations comportant :
la détermination d'une première durée d'après le premier RTT et les premières informations ;
la détermination de la durée du temporisateur de RTT de HARQ correspondant au premier processus de HARQ d'après la première durée ;
l'étape de détermination de la durée du temporisateur de RTT de HARQ qui correspond au premier processus de HARQ d'après la première durée comportant :
la détermination d'une plus grande valeur parmi la première durée et une première durée prédéfinie en tant que durée du temporisateur de RTT de HARQ correspondant au premier processus de HARQ ;
la première durée prédéfinie étant déterminée **d'après** un retard de rétroaction du ou des TB et le retard de traitement ;
l'étape de détermination de la première durée d'après le premier RTT et les premières informations comportant :
la détermination de la première durée **d'après** le premier RTT, le premier intervalle de temps, et le paramètre du nombre de fois de la transmission répétée de la rétroaction, la première durée étant égale à une somme du premier intervalle de temps, du premier paramètre et du premier RTT, ou la première durée étant égale à une somme du premier intervalle de temps, du second paramètre et du premier RTT ;
la première durée prédéfinie étant égale au retard de rétroaction du premier TB et au retard de traitement.

2. Procédé selon la revendication 1, les premières informations comportant en outre un état d'une fonction de rétroaction de HARQ qui correspond au premier processus de HARQ, et l'étape de détermination, par le premier dispositif, de la durée du temporisateur de RTT de HARQ qui correspond au premier processus de HARQ d'après le premier RTT comportant :
dans un cas où un état d'une fonction de rétroaction de HARQ correspondant au premier processus de HARQ est activé, la détermination de la durée du temporisateur de RTT de HARQ correspondant au premier processus de HARQ d'après le premier RTT ;
dans un cas où l'état de la fonction de rétroaction de HARQ correspondant au premier processus de HARQ est désactivé, le premier dispositif déterminant la durée du temporisateur de RTT de HARQ qui correspond au premier processus de HARQ comme la valeur prédéfinie.

3. Dispositif (400) de communication sans fil, comportant :
une unité (410) de traitement, qui détermine une durée d'un temporisateur de RTT de HARQ correspondant à un premier processus de HARQ **d'après** un premier RTT, le premier processus de HARQ étant un processus de HARQ utilisé par un premier canal de données, et le premier canal de données étant utilisé pour transporter un premier TB dans au moins un TB programmé par un PDCCH, et le premier RTT étant déterminé **d'après** un temps de propagation de signal entre un dispositif terminal et un dispositif de réseau, le dispositif de communication sans fil étant le dispositif de réseau, et le dispositif de communication sans fil étant une extrémité émettrice du premier canal de données,
le premier RTT étant déterminé d'après une avance temporelle, TA, du dispositif terminal, et le dispositif terminal et le dispositif de réseau appartenant à un système de réseau non terrestre NTN,
le dispositif terminal activant le temporisateur de RTT de HARQ après avoir achevé une émission de liaison montante ou une réception de liaison descendante, le dispositif de réseau effectuant une programmation de données après l'expiration du temporisateur de RTT de HARQ, et le dispositif de réseau n'effectuant pas la programmation de données avant l'expiration du temporisateur de RTT de HARQ ;
le ou les TB étant un TB de liaison descendante, le premier processus de HARQ étant un processus de HARQ de liaison descendante, et l'unité (410) de traitement déterminant, **d'après** le premier RTT et des premières informations, la durée du temporisateur de RTT de HARQ qui correspond au premier processus de HARQ, les premières informations comportant un paramètre du nombre de fois de transmission répétée d'une rétroaction d'information de HARQ-ACK correspondant au(x) TB ;
le ou les TB ne comportant qu'un premier TB, le retard de rétroaction du ou des TB comportant un premier intervalle de temps, et le premier intervalle de temps représentant un intervalle de temps entre une dernière transmission du premier TB et une première transmission d'une information de rétroaction de HARQ correspondant au premier TB ;
le paramètre du nombre de fois de la transmission répétée de la rétroaction de l'information de HARQ-ACK qui correspond au(x) TB comportant un second paramètre, le second paramètre étant utilisé pour indiquer un facteur de répétition de PUCCH ;
la détermination de la durée du temporisateur de RTT de HARQ qui correspond au premier processus de HARQ **d'après** le premier RTT et les premières informations comportant :
la détermination d'une première durée **d'après** le premier RTT et les premières informations ;
la détermination de la durée du temporisateur de RTT de HARQ qui correspond au premier processus de HARQ d'après la première durée ;
la détermination de la durée du temporisateur de RTT de HARQ qui correspond au premier processus de HARQ d'après la première durée comportant :
la détermination d'une plus grande valeur parmi la première durée et une première durée prédéfinie en tant que durée du temporisateur de RTT de HARQ correspondant au premier processus de HARQ ;
la première durée prédéfinie étant déterminée d'après un retard de rétroaction du ou des TB et le retard de traitement ;
la détermination de la première durée d'après le premier RTT et les premières informations comportant :
la détermination de la première durée **d'après** le premier RTT, le premier intervalle de temps, et le paramètre du nombre de fois de la transmission répétée de la rétroaction, la première durée étant égale à une somme du premier intervalle de temps, du premier paramètre et du premier RTT, ou la première durée étant égale à une somme du premier intervalle de temps, du second paramètre et du premier RTT ;
la première durée prédéfinie étant égale au retard de rétroaction du premier TB et au retard de traitement.
